# EUROPEAN PATENT APPLICATION

(11) **EP 4 845 261 A1**
(43) Date of publication of application: **25.11.2026**
(21) Application number: 25748027.7
(22) Date of filing: 27.01.2025
(51) Int. Cl.: H04W 72/044, H04W 52/04, H04W 52/18, H04W 52/28

(54) **COMMUNICATION METHOD AND APPARATUS**

(30) Priority: 30.01.2024 CN 202410133548
(71) Applicant: Huawei Technologies Co., Ltd., Shenzhen, Guangdong 518129 (CN)
(72) Inventor: YANG, Le, Shenzhen, Guangdong 518129 (CN); HE, Yuan, Shenzhen, Guangdong 518129 (CN); BAO, Dewei, Shenzhen, Guangdong 518129 (CN); ZHANG, Hao, Shenzhen, Guangdong 518129 (CN); YU, Yue, Shenzhen, Guangdong 518129 (CN)
(74) Representative: Huawei European IPR
(86) International application number: PCT/CN2025/075583
(87) International publication number: WO 2025/162465

(57) **Abstract**

This application relates to the communication field, and provides a communication method and apparatus, to provide differentiated coverage for different users. The method includes: An access point AP obtains a first identifier; and sends, based on a first transmit power, a data frame to a first terminal device indicated by the first identifier.

## Description

This application claims priority to Chinese Patent Application No. 202410133548.7, filed with the China National Intellectual Property Administration on January 30, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

A wireless local area network (wireless local area network, WLAN) is a widely used communication technology. Devices in the WLAN include an access point (access point, AP) and a station (station, STA).

With the rapid development of the WLAN, differentiated coverage is required in densely populated areas such as a campus network, an enterprise campus, an automatic production workshop, and a hospital.

### SUMMARY

This application provides a communication method and apparatus, to provide differentiated coverage for different users.

According to a first aspect, a communication method is provided. The method may be performed by an access point AP, may be performed by a component of the AP, for example, a processor, a chip, or a chip system of the AP, or may be implemented by a logical module or software that can implement all or some functions of the AP. The method includes: obtaining a first identifier; and sending, based on a first transmit power, a data frame to a first terminal device indicated by the first identifier.

Based on this solution, the AP may send, based on a specified transmit power, a data frame indicated by a specified identifier, where the transmit power is different from a transmit power of another data frame. The data frame indicated by the specified identifier is, for example, a data frame to be sent to a specified terminal device, or is, for another example, a data frame to be sent to a terminal device held by a specified user. In this way, according to the method, different terminal devices (a terminal device is also held by a specific user) or different users may be distinguished so that different transmit powers are set, to provide differentiated network coverage for different users.

In a possible design, the communication method further includes: obtaining a second identifier; and sending, based on a second transmit power, a data frame to a second terminal device indicated by the second identifier.

In a possible design, the first transmit power is greater than a first threshold.

Based on the possible design, the first transmit power is greater than the first threshold. For example, the first threshold may be a default transmit power of the AP. In this case, the first transmit power is greater than the default transmit power of the AP, this is equivalent to that the AP increases the transmit power of the AP when sending the data frame to the first terminal device, thereby improving user experience of the first terminal device, and ensuring user experience.

In a possible design, the first transmit power is determined based on a first path loss and a received signal strength threshold of the first terminal device, where the first path loss is a path loss of a transmission frame between the first terminal device and the access point AP associated with the first terminal device.

Based on the possible design, the first transmit power is determined based on the first path loss and the received signal strength threshold of the first terminal device. For example, the first transmit power may be a sum of the first path loss and the received signal strength threshold of the first terminal device, or the first transmit power may be a sum of a plurality of parameters including the first path loss and the received signal strength threshold of the first terminal device. The first path loss is the path loss of the transmission frame between the AP and the first terminal device, and the received signal strength threshold of the first terminal device is a minimum received signal strength of a transmission frame that is from the AP and received by the first terminal device through demodulation. Therefore, determining the first transmit power based on the first path loss and the received signal strength threshold of the first terminal device can ensure a received signal strength of the data frame received by the first terminal device, so that the first terminal device can demodulate the data frame.

In a possible design, the first path loss is determined based on a transmit power of a first transmission frame and a received signal strength of the first transmission frame.

In a possible design, the first path loss is a difference between the transmit power of the first transmission frame and the received signal strength of the first transmission frame.

Based on the foregoing two possible designs, the first path loss may be determined based on the transmit power of the first transmission frame and the received signal strength of the first transmission frame, to provide a foundation for the first transmit power determined based on the first path loss.

In a possible design, the first transmission frame is a downlink transmission frame, the received signal strength of the first transmission frame is determined based on a second transmission frame, the second transmission frame indicates the received signal strength of the first transmission frame, and the second transmission frame is an uplink transmission frame.

Based on the possible design, the second transmission frame may indicate the received signal strength of the first transmission frame, so that the first path loss may be determined based on the received signal strength of the first transmission frame and the transmit power of the first transmission frame, to provide the foundation for the first transmit power determined based on the first path loss.

In a possible design, the first transmission frame is an uplink transmission frame, the transmit power of the first transmission frame is determined based on a transmit power of a third transmission frame, and a frame type of the third transmission frame is different from a frame type of the first transmission frame.

Based on the possible design, when the first transmission frame is the uplink transmission frame, the transmit power of the first transmission frame may be determined based on a transmit power of an uplink or downlink transmission frame with a frame type different from the frame type of the first transmission frame, to provide a foundation for the first path loss determined based on the transmit power of the first transmission frame and the received signal strength of the first transmission frame and the first transmit power further determined based on the first path loss and the received signal strength threshold of the first terminal device.

In a possible design, the first transmission frame is an uplink data frame, and the third transmission frame is an uplink non-data frame. That the transmit power of the first transmission frame is determined based on the transmit power of the third transmission frame includes: The transmit power of the first transmission frame is determined based on the transmit power of the third transmission frame and a first value, where the first value is an error between the data frame and the non-data frame.

In a possible design, the transmit power of the first transmission frame is a difference between the transmit power of the third transmission frame and the first value.

With reference to the foregoing two possible designs, when the first transmission frame is the uplink data frame, the transmit power of the first transmission frame may be determined based on the transmit power of the uplink non-data frame and the error (that is, the first value) between the data frame and the non-data frame, to provide the foundation for the first path loss determined based on the transmit power of the first transmission frame and the received signal strength of the first transmission frame and the first transmit power further determined based on the first path loss and the received signal strength threshold of the first terminal device.

In a possible design, the first transmission frame is an uplink data frame, and the third transmission frame is a downlink non-data frame. That the transmit power of the first transmission frame is determined based on the transmit power of the third transmission frame includes: The transmit power of the first transmission frame is determined based on the transmit power of the third transmission frame, a first value, and a second value, where the first value is an error between the data frame and the non-data frame, and the second value is an error between a downlink transmission frame and an uplink transmission frame that are of a same frame type.

In a possible design, the transmit power of the first transmission frame is a difference between the transmit power of the third transmission frame, the first value, and the second value.

With reference to the foregoing two possible designs, when the first transmission frame is the uplink data frame, the transmit power of the first transmission frame may be determined based on the transmit power of the uplink non-data frame and the error (that is, the first value) between the data frame and the non-data frame. Because the first transmission frame is the uplink data frame, the transmit power of the first transmission frame is known to the first terminal device. However, accuracy of the transmit power of the first transmission frame reported by the terminal device is lower. Therefore, the transmit power of the first transmission frame may be calculated and determined based on the known transmit power of the downlink non-data frame and the error (that is, the first value) between the data frame and the non-data frame. In this way, in comparison with a solution in which the first terminal device reports the transmit power of the first transmission frame to a first device, the accuracy of the transmit power of the first transmission frame can be improved, thereby improving accuracy of the first path loss determined based on the transmit power of the first transmission frame and the received signal strength of the first transmission frame, and further improving accuracy of the first transmit power determined based on the first path loss and the received signal strength threshold of the first terminal device.

According to a second aspect, a communication method is provided. The method may be performed by a first device, may be performed by a component of the first device, for example, a processor, a chip, or a chip system of the first device, or may be implemented by a logical module or software that can implement all or some functions of the first device. The method includes: obtaining a first identifier; and obtaining a first transmit power for a first terminal device indicated by the first identifier, where the first transmit power is for sending a data frame of the first terminal device.

In a possible design, the communication method further includes: sending the first transmit power to an access point AP associated with the first terminal device.

In a possible design, the communication method further includes: sending the data frame of the first terminal device based on the first transmit power.

In a possible design, the first transmit power is greater than a first threshold.

In a possible design, the obtaining the first transmit power for the first terminal device indicated by the first identifier includes: obtaining a first path loss and a received signal strength threshold of the first terminal device, where the first path loss is a path loss of a transmission frame between the first terminal device and the AP associated with the first terminal device; and determining the first transmit power based on the first path loss and the received signal strength threshold of the first terminal device.

In a possible design, obtaining the first path loss includes: obtaining a transmit power of a first transmission frame and a received signal strength of the first transmission frame, where the transmission frame includes the first transmission frame; and determining the first path loss based on the transmit power of the first transmission frame and the received signal strength of the first transmission frame.

In a possible design, the first path loss is a difference between the transmit power of the first transmission frame and the received signal strength of the first transmission frame.

In a possible design, the first transmission frame is a downlink transmission frame; and obtaining the received signal strength of the first transmission frame includes: obtaining a second transmission frame, where the second transmission frame indicates the received signal strength of the first transmission frame.

In a possible design, the first transmission frame is an uplink transmission frame; and obtaining the transmit power of the first transmission frame includes: obtaining a transmit power of a third transmission frame, where a frame type of the third transmission frame is different from a frame type of the first transmission frame; and determining the transmit power of the first transmission frame based on the transmit power of the third transmission frame.

In a possible design, the first transmission frame is an uplink data frame, and the third transmission frame is an uplink non-data frame; and the determining the transmit power of the first transmission frame based on the transmit power of the third transmission frame includes: obtaining a first value, where the first value is an error between the data frame and the non-data frame; and determining the transmit power of the first transmission frame based on the transmit power of the third transmission frame and the first value.

In a possible design, the transmit power of the first transmission frame is a difference between the transmit power of the third transmission frame and the first value.

In a possible design, the first transmission frame is an uplink data frame, and the third transmission frame is a downlink non-data frame; and the determining the transmit power of the first transmission frame based on the transmit power of the third transmission frame includes: obtaining a first value, where the first value is an error between the data frame and the non-data frame; obtaining a second value, where the second value is an error between a downlink transmission frame and an uplink transmission frame that are of a same frame type; and determining the transmit power of the first transmission frame based on the transmit power of the third transmission frame, the first value, and the second value.

In a possible design, the transmit power of the first transmission frame is a difference between the transmit power of the third transmission frame, the first value, and the second value.

In a possible design, the communication method further includes: receiving a rate requirement of the first terminal device.

For technical effects brought by any possible design of the second aspect, refer to technical effects brought by a corresponding design of the first aspect. Details are not described herein again.

With reference to the first aspect and the second aspect, in a possible design, the received signal strength threshold of the first terminal device is a first receiver sensitivity in at least one receiver sensitivity.

With reference to the first aspect and the second aspect, in a possible design, the first receiver sensitivity is a largest sensitivity in the at least one receiver sensitivity, or the first receiver sensitivity is any one of the at least one receiver sensitivity.

With reference to the first aspect and the second aspect, in a possible design, the at least one receiver sensitivity is determined based on at least one modulation and coding scheme MCS; and the first receiver sensitivity is a receiver sensitivity corresponding to a first MCS, where the first MCS is an MCS with a largest value in the at least one MCS, or the first MCS is one of the at least one MCS.

With reference to the foregoing three possible designs, the first receiver sensitivity may be determined based on the at least one receiver sensitivity, to provide a foundation for the first transmit power determined based on the first receiver sensitivity.

With reference to the first aspect and the second aspect, in a possible design, the received signal strength threshold of the first terminal device is determined based on a first signal-to-noise ratio threshold in at least one signal-to-noise ratio threshold.

With reference to the first aspect and the second aspect, in a possible design, the received signal strength threshold of the first terminal device is the first signal-to-noise ratio threshold, or the received signal strength threshold of the first terminal device is a sum of the first signal-to-noise ratio threshold and a first noise value, where the first noise value is a magnitude of noise between the AP and the first terminal device.

With reference to the first aspect and the second aspect, in a possible design, the first signal-to-noise ratio threshold is a largest signal-to-noise ratio threshold in the at least one signal-to-noise ratio threshold, or the first signal-to-noise ratio threshold is any one of the at least one signal-to-noise ratio threshold.

With reference to the first aspect and the second aspect, in a possible design, the at least one signal-to-noise ratio threshold is determined based on at least one MCS; and the first signal-to-noise ratio threshold is a signal-to-noise ratio threshold corresponding to a first MCS, where the first MCS is an MCS with a largest value in the at least one MCS, or the first MCS is any one of the at least one MCS.

With reference to the foregoing three possible designs, the first signal-to-noise ratio threshold may be determined based on the at least one signal-to-noise ratio threshold, to provide a foundation for the first transmit power determined based on the first signal-to-noise ratio threshold.

With reference to the first aspect and the second aspect, in a possible design, the at least one MCS includes one or more MCSs corresponding to the rate requirement of the first terminal device.

With reference to the first aspect and the second aspect, in a possible design, the first identifier includes an identifier of the first terminal device; or the first identifier includes a user identifier, and the user identifier indicates a user corresponding to the first terminal device.

According to a third aspect, a communication apparatus is provided, to implement various methods. The communication apparatus may be the AP in the first aspect, the first device in the second aspect, or an apparatus included in the AP or a the first device, for example, a chip or a chip system. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementations thereof. The transceiver module may include a receiving module and a sending module that are respectively configured to implement a receiving function and a sending function in any one of the foregoing aspects and any possible implementations thereof.

In some possible designs, the transceiver module may include a transceiver circuit, a transceiver device, a transceiver, or a communication interface.

According to a fourth aspect, a communication apparatus is provided, and includes a processor and a memory. The memory is configured to store computer instructions, and when the processor executes the instructions, the communication apparatus is caused to perform the method according to any one of the foregoing aspects. The communication apparatus may be the AP in the first aspect, the first device in the second aspect, or an apparatus included in the AP or the first device, for example, a chip or a chip system.

According to a fifth aspect, a communication apparatus is provided, and includes a processor and a communication interface. The communication interface is configured to communicate with a module outside the communication apparatus, and the processor is configured to execute a computer program or instructions, to cause the communication apparatus to perform the method according to any one of the foregoing aspects. The communication apparatus may be the AP in the first aspect, the first device in the second aspect, or an apparatus included in the AP or the first device, for example, a chip or a chip system.

According to a sixth aspect, a communication apparatus is provided, and includes at least one processor. The processor is configured to execute a computer program or instructions stored in a memory, to cause the communication apparatus to perform the method according to any one of the foregoing aspects. The memory may be coupled to the processor, or may be independent of the processor. The communication apparatus may be the AP in the first aspect, the first device in the second aspect, or an apparatus included in the AP or the first device, for example, a chip or a chip system.

In some possible designs, the communication apparatus includes the memory, and the memory is configured to store necessary program instructions and data.

In some possible designs, when the apparatus is a chip system, the apparatus may include a chip, or may include a chip and another discrete device.

It may be understood that when the communication apparatus provided in any one of the third aspect to the sixth aspect is a chip, a sending action/function of the communication apparatus may be understood as outputting information, and a receiving action/function of the communication apparatus may be understood as inputting information.

According to a seventh aspect, a computer-readable storage medium is provided. The computer-readable storage medium stores a computer program or instructions. When the computer program or the instructions are run on a communication apparatus, the communication apparatus is caused to perform the method according to any one of the foregoing aspects.

According to an eighth aspect, a computer program product including instructions is provided. When the computer program product is run on a communication apparatus, the communication apparatus is caused to perform the method according to any one of the foregoing aspects.

According to a ninth aspect, a communication system is provided. The communication system includes an access point AP and a terminal device. The AP is configured to obtain a first identifier; and send, based on a first transmit power, a data frame to a first terminal device indicated by the first identifier. The terminal device is configured to receive the data frame from the AP.

In some possible designs, the AP included in the communication system is the AP (or the apparatus included in the AP, for example, the chip or the chip system) in the first aspect.

According to a tenth aspect, a communication system is provided. The communication system includes the first device (or the apparatus included in the first device, for example, the chip or the chip system) in the second aspect. The first device is configured to obtain a first identifier; and obtain a first transmit power for a first terminal device indicated by the first identifier.

In a possible design, the first device is further configured to send the first transmit power to an access point AP associated with the first terminal device.

In a possible design, the first device is further configured to send the data frame of the first terminal device based on the first transmit power.

For technical effects brought by any design of the third aspect to the tenth aspect, refer to technical effects brought by different designs of the first aspect or the second aspect. Details are not described herein again.

### BRIEF DESCRIPTION OF DRAWINGS

FIG. 1 is a diagram of an architecture of a WLAN communication system according to an embodiment of this application;
FIG. 2 is a schematic flowchart of a communication method according to an embodiment of this application;
FIG. 3 is a schematic flowchart of still another communication method according to an embodiment of this application;
FIG. 4 is a schematic flowchart of still another communication method according to an embodiment of this application;
FIG. 5 is a schematic flowchart of determining a first transmit power according to an embodiment of this application;
FIG. 6 is a schematic flowchart of determining a received signal strength of a first transmission frame according to an embodiment of this application;
FIG. 7 is a schematic flowchart of determining a transmit power of a first transmission frame according to an embodiment of this application;
FIG. 8 is a schematic flowchart of determining, by an AP, a scheduling mode of a terminal device according to an embodiment of this application;
FIG. 9 is a diagram of a structure of a communication apparatus according to an embodiment of this application;
FIG. 10 is a diagram of a structure of still another communication apparatus according to an embodiment of this application; and
FIG. 11 is a diagram of a structure of still another communication apparatus according to an embodiment of this application.

### DESCRIPTION OF EMBODIMENTS

In the descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural.

In the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, terms such as "example" or "for example" are used to represent giving an example, an illustration, or a description. Any embodiment or design solution described as "example" or "for example" in embodiments of this application should not be interpreted as being more preferred or advantageous than another embodiment or design solution. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In various embodiments of this application and various implementations/implementation methods in various embodiments, unless otherwise specified or a logic conflict occurs, terms and/or descriptions are consistent and may be mutually referenced between different embodiments and between the implementations/implementation methods in embodiments. Technical features in the different embodiments and the implementations/implementation methods in embodiments may be combined based on an internal logic relationship thereof to form a new embodiment, an implementation, or an implementation method. The following implementations of this application are not intended to limit the protection scope of this application.

With the rapid development of a WLAN, differentiated coverage is required in densely populated areas such as a campus network, an enterprise campus, an automatic production workshop, and a hospital.

In an implementation, an AP may set different transmit powers based on frame types. For example, the AP sets a transmit power for a data frame; and the AP sets another transmit power for a management frame or a control frame. In this implementation, the AP separately sets different power upper limits for different frame types (such as the data frame, the management frame, and the control frame), to implement power control for different frame types.

In another implementation, a WLAN controller may set different transmit powers for an AP based on whether there is a terminal device in a coverage hole. For example, when there is a terminal device in a coverage hole, the WLAN controller may increase a current transmit power of the AP; and when there is no terminal device in a coverage hole, the AP may use the current transmit power. In other words, in this implementation, different powers are respectively set for the AP based on whether there is a terminal device in a coverage hole.

In the foregoing two implementations, an overall power of the AP is set. In other words, once the power of the AP is adjusted, the AP provides services for all users by using an adjusted power. For example, in the first implementation, the AP sends data frames of all the users by using a power 1, and the AP sends control frames of all the users by using a power 2. In the second implementation, the AP sends frames of all the users in a time period T1 by using the power 1, and the AP sends the frames of all the users in a time period T2 by using the power 2.

Embodiments of this application provide a communication method and apparatus. According to the method, an AP may set a transmit power for a data frame indicated by a specified identifier, that is, the AP sends, based on the transmit power, the data frame indicated by the specified identifier, where the transmit power of the data frame indicated by the specified identifier is different from a transmit power of another data frame. The data frame indicated by the specified identifier is, for example, a data frame to be sent to a specified terminal device, and the specified identifier is, for example, a device identifier of the specified terminal device (for example, a MAC address of the device or an IP address of the device). The data frame specified by the specified identifier is, for example, a data frame to be sent to a terminal device held by a specified user, and the specified identifier is, for example, a user identifier of the specified user. For example, the transmit power for sending the data frame indicated by the specified identifier may be preset, may be set based on a requirement of the specified user, or may be determined based on communication quality of the specified terminal device. In this way, according to the method, different terminal devices (a terminal device is also held by a specific user) or different users may be distinguished so that different transmit powers are set, to provide differentiated network coverage for different users.

Embodiments of this application are applicable to a WLAN scenario, and are applicable to an IEEE 802.11 system standard, for example, an 802.11a/b/g standard, an 802.11n standard, an 802.11ac standard, or an 802.11ax standard; a next generation standard of the IEEE 802.11 system standard, for example, an 802.11be standard; or a further next generation of the IEEE 802.11 system standard. Alternatively, embodiments of this application are applicable to a wireless local area network system, for example, an internet of things (internet of things, IoT) network or a vehicle-to-everything (Vehicle to X, V2X) network. Certainly, embodiments of this application are further applicable to other possible communication systems, such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and another next generation communication system.

This application provides a WLAN communication system. The WLAN communication system includes a first device and at least one terminal device associated with the first device. The first device may be any one of an AP, a WLAN controller (or a wireless controller), or an analyzer. When the WLAN system works based on a control and provisioning of wireless access points (control and provisioning of wireless access points, CAPWAP) protocol, the WLAN controller or the wireless controller may be an access controller (Access Controller, AC), and correspondingly, the AP may be a wireless termination point (wireless termination point, WTP). In this application, an example in which the WLAN controller or the wireless controller is the AC is used for description.

Optionally, when the first device is either the AC or the analyzer, the WLAN communication system further includes the AP. In this case, the first device is configured to set a transmit power for the AP.

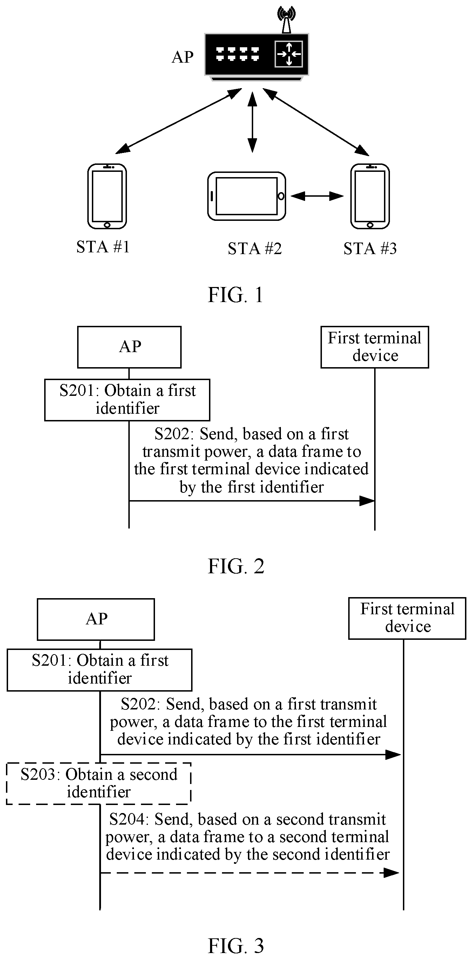

FIG. 1 is a diagram of an architecture of a WLAN communication system according to an embodiment of this application. In FIG. 1, an example in which a WLAN includes one AP and the AP is associated with a STA #1, a STA #2, and a STA #3 is used. The AP may schedule a radio resource for a STA associated with the AP, and transmit data to the STA on the scheduled radio resource. For example, the AP may schedule radio resources for the STA #1, the STA #2, and the STA #3, and transmit data, including an uplink data frame and/or a downlink data frame, to the STA #1, the STA #2, and the STA #3 on the scheduled radio resources.

The terminal device in embodiments of this application may be a wireless communication chip, a wireless sensor, or a wireless communication terminal device, for example, a user terminal, a user apparatus, an access apparatus, a subscriber station, a subscriber unit, a mobile station, a user agent, and user equipment that support a wireless fidelity (wireless fidelity, Wi-Fi) communication function. The user terminal may include various handheld devices, vehicle-mounted devices, wearable devices, internet of things (internet of things, IoT) devices, or computing devices that have a wireless communication function, or another processing device connected to a wireless modem, user devices (user equipment, UE) of various forms, a mobile station (mobile station, MS), a terminal (terminal), a terminal device (terminal equipment), a portable communication device, a handheld device, a portable computing device, an entertainment device, a game device or system, a global positioning system device, or any other appropriate device configured to perform network communication via a wireless medium. In addition, the terminal may support the 802.11be standard. The terminal may alternatively support a plurality of WLAN standards such as 802.11ax, 802.11ac, 802.11n, 802.11g, 802.11b, and 802.11a.

The AP in embodiments of this application may be an apparatus that is deployed in a wireless communication network to provide a wireless communication function for a STA associated with the AP. The AP is mainly deployed at home, inside a building, and in a campus, with a typical coverage radius of tens of meters to hundreds of meters. Certainly, the AP may alternatively be deployed outdoors. The AP is equivalent to a bridge connecting a wireless local area network and another network (for example, a wired network or a cellular mobile communication network), and is mainly used to connect wireless network clients together, and then connect the wireless local area network to the another network. Specifically, the AP may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP may support the 802.11be standard. The AP may alternatively support WLAN standards such as 802.11ax, 802.11ac, 802.11n, 802.11g, 802.11b, and 802.11a.

It should be noted that the WLAN communication system described in embodiments of this application is intended to describe the technical solutions in embodiments of this application more clearly, and does not constitute a limitation on the technical solutions provided in embodiments of this application. A person of ordinary skill in the art may know that: With the evolution of a network architecture and the emergence of new service scenarios, the technical solutions provided in embodiments of this application are also applicable to similar technical problems.

The following describes the communication method provided in embodiments of this application with reference to the accompanying drawings. It should be noted that in the following embodiments of this application, a name of a message between devices, a name of each parameter, a name of each piece of information, or the like is merely an example, and may be another name in another embodiment. This is not specifically limited in the method provided in this application.

It may be understood that an execution body may perform some or all of the steps in embodiments of this application. The steps or operations are merely examples. In embodiments of this application, other operations or variations of various operations may be further performed. In addition, the steps may be performed in a sequence different from that presented in embodiments of this application, and not all operations in embodiments of this application may be performed.

FIG. 2 is a flowchart of a communication method according to an embodiment of this application. The communication method may include the following steps S201 and S202.

S201: An AP obtains a first identifier.

Optionally, the first identifier may be an identifier of a terminal device. Alternatively, the first identifier may be a user identifier.

Optionally, one user identifier may be associated with an identifier of at least one terminal device. Therefore, when the first identifier is the user identifier, the first identifier may be associated with the identifier of the at least one terminal device. In other words, in this case, the first identifier may indicate the at least one terminal device.

For example, the identifier of the terminal device may be an identifier (ID) of the terminal device, may be a medium access control (Medium Access Control, MAC) address of the terminal device, may be an internet protocol (Internet Protocol, IP) address of the terminal device, or may be in another implementation form. This is not limited in embodiments of this application.

For example, the first identifier may be a very important person (very important person, VIP) identifier. The VIP identifier may be understood as a user identifier of a VIP user, and correspondingly, a non-VIP user identifier may be understood as an identifier of a non-VIP user. Alternatively, the VIP identifier may be understood as an identifier of a terminal device associated with the VIP user. For example, each VIP user may be associated with an identifier of at least one terminal device.

The AP may obtain the first identifier based on a configuration. For example, a network administrator or a network operations and maintenance personnel specifies the VIP identifier in a configuration manner, and the AP reads a configuration file to obtain the first identifier, or the AP reads a configuration command entered in a command line, a control interface, or a management interface to obtain the first identifier.

The AP may alternatively receive the first identifier. For example, the AP receives a first identifier sent by an AC or an analyzer.

S202: The AP sends, based on a first transmit power, a data frame to a first terminal device indicated by the first identifier.

Optionally, the first terminal device may be understood as a terminal device indicated by the first identifier. When the first identifier indicates one terminal device, the first terminal device includes the one terminal device. When the first identifier indicates a plurality of terminal devices, the first terminal device includes the plurality of terminal devices.

Optionally, the data frame sent by the AP to the first terminal device may also be referred to as a data frame of the first terminal device, or may have another name. This is not limited in embodiments of this application.

Optionally, the first transmit power is greater than a default transmit power of the AP. For example, the default transmit power may be understood as a power used by the AP by default to send a transmission frame. The default transmit power may be a transmit power set by the AP before delivery, or may be a transmit power that is set for the AP after delivery and that is for sending a transmission frame. When a terminal is not the first terminal device, the AP sends, by using the default transmit power, a data frame to be sent to the terminal.

For example, the transmission frame may be a data frame or a non-data frame. For example, the non-data frame may include a control frame (control frame) or a management frame (management frame). Specifically, the management frame includes but is not limited to a beacon frame (beacon) or an association frame (association). The control frame includes but is not limited to a request to send (request to send, RTS) frame, a clear to send (clear to send, CTS) frame, an acknowledgment (acknowledgment, ACK) frame, or a negative acknowledgment (negative acknowledgment, NACK) frame.

Optionally, that the AP sends, based on the first transmit power, the data frame to the first terminal device indicated by the first identifier includes: When a received signal strength of a transmission frame between the AP and the first terminal device is greater than or equal to a threshold A, the AP sends the data frame to the first terminal device based on the first transmit power.

For example, the AP may determine whether the received signal strength of the transmission frame between the AP and the first terminal device is greater than or equal to the threshold A. When the received signal strength is less than the threshold A, it indicates that the first terminal device is far away from signal coverage of the AP. Therefore, the AP does not need to consider ensuring user experience of the first terminal device. For example, the AP sends the data frame to the first terminal device without using the first transmit power. Further, in this case, the AP may send the data frame to the first terminal device based on the default transmit power. When the received signal strength is greater than or equal to the threshold A, it indicates that the first terminal device is in the signal coverage of the AP. Therefore, the AP needs to consider ensuring user experience of the first terminal device. For example, the AP may send the data frame to the first terminal device based on the first transmit power, to ensure user experience.

Optionally, a power control switch may be preset in the AP. When the received signal strength of the transmission frame between the AP and the first terminal device is greater than or equal to the threshold A, the power control switch may be turned on. When the received signal strength of the transmission frame between the AP and the first terminal device is less than the threshold A, the power control switch may be turned off. Therefore, the AP may determine, based on whether the power control switch is turned on, whether to send the data frame to the first terminal device based on the first transmit power. For example, when the power control switch is turned on, the AP may send the data frame to the first terminal device based on the first transmit power. When the power control switch is turned off, the AP may send the data frame to the first terminal device based on the default transmit power.

Optionally, the AP may determine, in real time, a relationship between the threshold A and the received signal strength of the transmission frame between the AP and the first terminal device; the AP may periodically determine the relationship between the threshold A and the received signal strength of the transmission frame between the AP and the first terminal device; or the AP may determine the relationship between the threshold A and the received signal strength of the transmission frame between the AP and the first terminal device each time before sending a data frame to the first terminal device.

For example, a value of the threshold A may be -68 dBm. It may be understood that, in this embodiment of this application, only the value of the threshold A is listed as an example. Actually, the value of the threshold A may be another value other than the foregoing value. This is not limited in embodiments of this application. It may be understood that the threshold A may also have another name, for example, a first signal strength threshold. This is not limited in embodiments of this application.

Optionally, as shown in FIG. 3, the communication method may further include the following steps S203 and S204.

S203: The AP obtains a second identifier.

S204: The AP sends, based on a second transmit power, a data frame to a second terminal device indicated by the second identifier.

For example, the second terminal device may be understood as a terminal device indicated by the second identifier. When the second identifier indicates one terminal device, the second terminal device includes the one terminal device. When the second identifier indicates a plurality of terminal devices, the second terminal device includes the plurality of terminal devices.

For example, the data frame sent by the AP to the second terminal device may also be referred to as a data frame of the second terminal device, or may have another name. This is not limited in embodiments of this application.

Optionally, the second identifier indicates a user/terminal device that does not require key assurance, and the second transmit power is a default transmit power.

Optionally, similar to the first identifier, the second identifier also indicates a user or a terminal device that requires key assurance. For example, a manner of obtaining the second identifier is similar to a manner of obtaining the first identifier. For details, refer to related descriptions of the first identifier in step S201. Details are not described herein again.

Optionally, the second transmit power is the same as the first transmit power. For example, there are a plurality of users (for example, two users) or a plurality of terminal devices (for example, two terminal devices) that require key assurance in a WLAN network. The AP obtains identifiers of the two users or the two terminal devices: a first identifier and a second identifier. The AP sends, based on a same transmit power, a data frame to be sent to the first terminal device and a data frame to be sent to the second terminal device.

Optionally, the second transmit power is different from the first transmit power. For example, for users/terminal devices that require key assurance, the AP may further distinguish between assurance levels, and use different transmit powers for different assurance levels. For example, if an assurance level of the terminal device/user indicated by the first identifier is higher than an assurance level of the terminal device/user indicated by the second identifier, the first transmit power is greater than the second transmit power. Otherwise, the second transmit power is greater than the first transmit power.

Based on this optional solution, because the second transmit power is different from the first transmit power, the AP uses different transmit powers when sending the data frame to be sent to the first terminal device and sending the data frame to be sent to the second terminal device, that is, the AP sends data frames to different users by using different transmit powers, to provide differentiated network coverage for different users.

It should be noted that the foregoing uses only two types of identifiers (that is, the first identifier and the second identifier) as an example to describe transmit powers corresponding to different identifiers (for example, the first transmit power corresponding to the first identifier or the second transmit power corresponding to the second identifier). Actually, the AP may obtain more identifiers, and different identifiers may also correspond to different transmit powers. In other words, the AP may separately send, based on a plurality of transmit powers, data frames of terminal devices indicated by different identifiers.

According to the communication method provided in this embodiment of this application, the AP may set a transmit power for a data frame indicated by a specified identifier, that is, the AP sends, based on the transmit power, the data frame indicated by the specified identifier, where the transmit power is different from a transmit power of another data frame. The data frame indicated by the specified identifier is, for example, a data frame to be sent to a specified terminal device, or is, for another example, a data frame to be sent to a terminal device held by a specified user. In this way, according to the method, different terminal devices (a terminal device is also held by a specific user) or different users may be distinguished so that different transmit powers are set, to provide differentiated network coverage for different users.

It should be noted that the foregoing steps S201 to S204 are merely an example of a procedure of the communication method. An execution sequence between step S201 and step S203 is not limited. For example, step S201 may be performed before step S203; step S201 may be performed after step S203; or step S201 and step S203 may be performed simultaneously. In addition, an execution sequence between step S202 and step S204 is not limited. For example, step S202 may be performed before step S204, or step S202 may be performed after step S204.

Optionally, a manner of obtaining the "first transmit power" described in the foregoing embodiments is similar to a manner of obtaining the "second transmit power (the second transmit power is greater than the default transmit power of the AP)". The following uses the manner of obtaining the first transmit power as an example for description. For the manner of obtaining the second transmit power, refer to related descriptions of the first transmit power described below. Details are not described herein again.

In an example, the first transmit power may be set by the AP. For example, the AP may preset the first transmit power, and then send the data frame to the first terminal device based on the first transmit power. Based on this example, the AP sets the first transmit power. In this way, in comparison with a solution in which another device other than the AP determines the first transmit power and notifies the AP of the first transmit power, message interaction can be reduced, and overheads can be reduced.

In another example, the first transmit power may be set and sent to the AP by another device other than the AP. For example, the another device other than the AP may include a device like the AC or the analyzer.

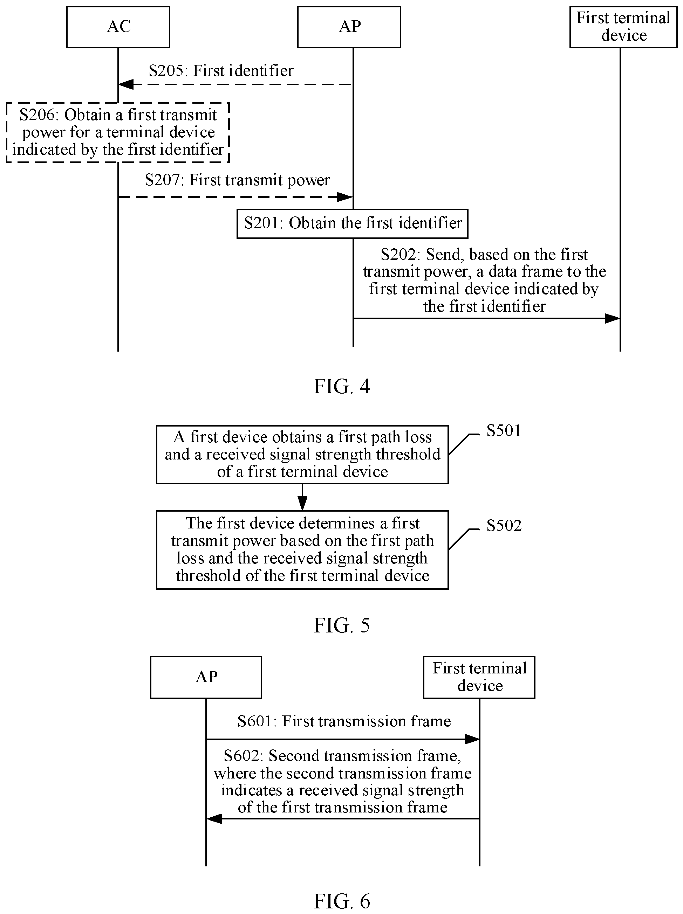

For example, when the first transmit power is set and sent to the AP by the another device other than the AP, that the another device other than the AP is the AC is used as an example. A procedure in which the AP obtains the first transmit power includes steps S205 to S207 shown in FIG. 4.

S205: The AP sends the first identifier to the AC. Correspondingly, the AC receives the first identifier from the AP.

S206: The AC obtains the first transmit power for the first terminal device.

S207: The AC sends the first transmit power to the AP. Correspondingly, the AP receives the first transmit power from the AC.

Based on this example, the another device other than the AP sets the first transmit power and notifies the AP of the first transmit power. In this way, in comparison with the solution in which the AP determines the first transmit power, resource consumption of the AP can be reduced.

With reference to the foregoing two examples, devices that set the first transmit power are collectively referred to as a first device (for example, any one of the AP, the AC, and the analyzer). For example, the first device may set the first transmit power in the following three manners.

Manner 1: The first transmit power may be preset.

Optionally, the first transmit power may be predefined in a protocol, may be configured by the AP before delivery, or may be preset by the first device.

For example, when the first transmit power is preset by the first device, the setting of the first transmit power may include the following two implementations.

In one implementation, the first transmit power may be randomly set by the first device.

Optionally, the first transmit power is greater than a threshold B. For example, the first transmit power may be any value greater than the threshold B.

Optionally, a value of the threshold B may be the default transmit power of the AP. It may be understood that the threshold B may also be referred to as a first threshold or have another name. This is not limited in embodiments of this application.

Based on this implementation, the first device may set the first transmit power greater than the first threshold. When the first threshold is the default transmit power of the AP, the first transmit power is greater than the default transmit power of the AP, this is equivalent to that the AP increases the transmit power of the AP when sending the data frame to the first terminal device, thereby improving user experience of the first terminal device, and ensuring user experience.

In the other implementation, the first transmit power is one of at least one predefined power.

Optionally, the first transmit power may be any one of the at least one power, or the first transmit power may be a smallest power in the at least one power.

Optionally, the smallest power in the at least one power is greater than the default transmit power of the AP, that is, the first transmit power is greater than the default transmit power. For example, when the at least one power includes one power, it may also be considered that a value of the first transmit power is a default value.

Based on this implementation, the first device may select the first transmit power in the at least one power. The smallest power in the at least one power is greater than the default transmit power, that is, the first transmit power is greater than the default transmit power of the AP. In this case, this is equivalent to that the AP increases the transmit power of the AP when sending the data frame to the first terminal device, thereby improving user experience of the first terminal device, and ensuring user experience.

Based on Manner 1, because the first transmit power is preset, the first device may directly learn of the first transmit power, to provide a foundation for the AP to send the data frame to the first terminal device based on the first transmit power.

Manner 2: The first transmit power may be determined by the first device based on a requirement of the first terminal device.

Optionally, the first device may obtain the requirement of the first terminal device based on a configuration. For example, the first device reads a configuration file or a configuration command to obtain the requirement of the first terminal device. For example, the network administrator or the operations and maintenance personnel indicates, by using a configuration file or a configuration command, a requirement of a user/terminal device corresponding to the first identifier, so that the first device obtains a requirement of one or more terminal devices indicated by the first identifier.

Optionally, the first device may receive the requirement of the first terminal device that is sent by another device. For example, when the first device is the AP, the first terminal device may directly send the requirement of the first terminal device to the AP. When the first device is the another device other than the AP, the first terminal device may send the requirement of the first terminal device to the AP, and then the AP may send the requirement to the first device.

Optionally, the requirement of the first terminal device may be understood as a requirement of the first terminal device for the first transmit power, or may be understood as a requirement of the first terminal device on communication quality.

For example, the first device may prestore correspondences between different requirements and different transmit powers. Therefore, after learning of the requirement of the first terminal device on the communication quality, the first device may obtain, from the correspondences, a transmit power (that is, the first transmit power) corresponding to the requirement.

Optionally, in the correspondences between different requirements and different transmit powers, the requirements may be in one-to-one correspondence with the transmit powers, or the requirements may be in many-to-one correspondence with the transmit powers. For example, the correspondences between different requirements and different transmit powers may include content shown in Table 1 or Table 2.

**Table 1**

| Requirement | Transmit power |
|---|---|
| Requirement #1 | Transmit power #1 |
| Requirement #2 | Transmit power #2 |
| Requirement #3 | Transmit power #3 |
| ... | |

**Table 2**

| Requirement | Transmit power |
|---|---|
| Requirement #1 | Transmit power #1 |
| | Transmit power #2 |
| | Transmit power #3 |
| Requirement #2 | Transmit power #4 |
| | Transmit power #5 |
| Requirement #3 | Transmit power #6 |
| ... | |

It should be noted that the foregoing example is described by using only an example in which an implementation form of the correspondences between different requirements and different transmit powers is a table form. The implementation form of the correspondences between different requirements and different transmit powers may alternatively be another form other than the table form, for example, a set form. This is not limited in embodiments of this application.

Based on Manner 2, the first device may determine the first transmit power based on the requirement of the first terminal device, to meet the requirement of the first terminal device, to provide a foundation for the AP to send the data frame to the first terminal device based on the first transmit power.

Manner 3: The first transmit power is determined based on a first path loss and a received signal strength threshold of the first terminal device. The first path loss is a path loss of a transmission frame between the AP and the first terminal device.

For example, in Manner 3, the first device may determine the first transmit power based on the first path loss and the received signal strength threshold of the first terminal device. Specifically, as shown in FIG. 5, the first device may set the first transmit power based on steps S501 and S502. When the first device is the another device other than the AP, step S206 may be replaced with S501 and S502.

S501: The first device obtains the first path loss and the received signal strength threshold of the first terminal device.

For example, a received signal strength may be represented by a received signal strength indicator (received signal strength indicator, RSSI). For example, a received signal strength of a transmission frame may be represented by an RSSI of the transmission frame.

Optionally, the first path loss may be understood as a path loss of one or more transmission frames between the first terminal device and the AP associated with the first terminal device.

Optionally, the received signal strength threshold of the first terminal device may indicate a received signal strength required by the first terminal device to demodulate a transmission frame received by the first terminal device.

S502: The first device determines the first transmit power based on the first path loss and the received signal strength threshold of the first terminal device.

In an implementation, that the first device determines the first transmit power based on the first path loss and the received signal strength threshold of the first terminal device may be understood as follows: The first device may determine the first transmit power based on two parameters: the first path loss and the received signal strength threshold of the first terminal device.

Optionally, the first transmit power is a sum of the first path loss and the received signal strength threshold of the first terminal device.

In another implementation, that the first device determines the first transmit power based on the first path loss and the received signal strength threshold of the first terminal device may be understood as: The first device may determine the first transmit power based on a plurality of parameters, where the plurality of parameters include two parameters: the first path loss and the received signal strength threshold of the first terminal device. In other words, in a process in which the first device determines the first transmit power, in addition to the two parameters: the first path loss and the received signal strength threshold of the first terminal device, another parameter is further needed for assistance.

Optionally, the first transmit power is a sum of the plurality of parameters.

Based on Manner 3, the first transmit power is determined based on the first path loss and the received signal strength threshold of the first terminal device. For example, the first transmit power may be the sum of the first path loss and the received signal strength threshold of the first terminal device, or the first transmit power may be the sum of the plurality of parameters including the first path loss and the received signal strength threshold of the first terminal device. The first path loss is the path loss of the transmission frame between the AP and the first terminal device, and the received signal strength threshold of the first terminal device is a minimum received signal strength of a transmission frame that is from the AP and received by the first terminal device through demodulation. Therefore, determining the first transmit power based on the first path loss and the received signal strength threshold of the first terminal device can ensure a received signal strength of the data frame received by the first terminal device, so that the first terminal device can demodulate the data frame.

Optionally, after determining the first transmit power, the first device may further determine a final first transmit power based on a transmit power threshold of the AP, to send the data frame to the first terminal device based on the final first transmit power. In other words, step S202 may be replaced with the following: The AP sends the data frame to the first terminal device based on the final first transmit power.

Optionally, the final first transmit power is a smaller value of the first transmit power and the transmit power threshold of the AP.

Optionally, the transmit power threshold of the AP is a sum of a maximum transmit power supported in a regulation and a gain of the AP. The gain of the AP is a sum of a combining gain of the AP and an antenna gain of the AP. For example, the maximum transmit power is 20 dBm, and the gain of the AP is 14 dBm. In this case, the transmit power threshold of the AP is 34 dBm. In this case, if the first transmit power is 35 dBm, the final first transmit power is 34 dBm.

For example, the foregoing uses only an example in which the gain of the AP is 14 dBm for description. Actually, the gain of the AP is alternatively another value. This is not limited in embodiments of this application.

It may be understood that, because different countries support different maximum transmit powers, the maximum transmit power supported in the regulation may be understood as a maximum transmit power supported in a regulation of a country in which the AP and the first terminal device are used. In addition, because APs of different models also correspond to different maximum powers, the maximum transmit power supported in the regulation may also be understood as a maximum transmit power corresponding to a model of the AP in the regulation in the country to which the AP and the first terminal device are used.

Based on the foregoing three optional solutions, the first device may determine the final first transmit power based on the first transmit power and the transmit power threshold of the AP, to send the data frame to the first terminal device based on the final first transmit power. When the first transmit power is greater than the transmit power threshold of the AP, normal sending of the data frame cannot be ensured. Therefore, after determining the first transmit power, the first device may compare the first transmit power with the transmit power threshold of the AP. If the first transmit power is greater than the transmit power threshold of the AP, the first transmit power is properly adjusted to be less than or equal to the transmit power threshold of the AP, to ensure normal sending of the data frame.

The foregoing describes the first transmit power, and the following describes in detail the "first path loss" in the foregoing embodiments.

In an example, the first path loss is a path loss of a specific transmission frame between the AP and the first terminal device. For example, the first path loss may be a path loss of a first transmission frame.

For example, the first transmission frame may be an uplink transmission frame or a downlink transmission frame. Further, the first transmission frame may be a data frame or a non-data frame. In this case, the first transmission frame may be any one of an uplink data frame, an uplink non-data frame, a downlink data frame, or a downlink non-data frame.

For example, in this example, the path loss (that is, the first path loss) of the first transmission frame may be obtained in the following two manners.

In a first possible implementation, the first device may determine the first path loss based on a transmit power of the first transmission frame and a received signal strength of the first transmission frame.

Optionally, the first path loss is a difference between the transmit power of the first transmission frame and the received signal strength of the first transmission frame.

For example, for manners of obtaining the transmit power of the first transmission frame and the received signal strength of the first transmission frame, refer to related descriptions of the transmit power of the first transmission frame and the received signal strength of the first transmission frame described below. Details are not described herein again.

Based on this possible implementation, the first device may determine the first path loss based on the transmit power of the first transmission frame and the received signal strength of the first transmission frame, to provide a foundation for the first transmit power determined based on the first path loss.

In a second possible implementation, the first path loss is prestored by the first device.

For example, during transmission of the first transmission frame, the first device may determine and store the first path loss. Therefore, when obtaining the first path loss in step S501, the first device may directly obtain the first path loss from a storage unit.

Specifically, the AP may transmit different transmission frames to different terminal devices indicated by different identifiers. Therefore, when the AP transmits the different transmission frames to the different terminal devices indicated by the different identifiers, the first device may determine, based on an identifier indicating a terminal device, whether the identifier is the first identifier, to determine whether a transmission frame transmitted between the AP and the terminal device indicated by the identifier is the first transmission frame. When the identifier is the first identifier, the transmission frame transmitted between the AP and the terminal device indicated by the identifier is the first transmission frame. Therefore, during transmission of the first transmission frame, the first device may determine and store the first path loss. When the identifier is not the first identifier, the transmission frame transmitted between the AP and the terminal device indicated by the identifier is not the first transmission frame. Therefore, the first device does not need to determine the first path loss.

Based on this possible implementation, the first path loss is determined based on the transmit power of the first transmission frame and the received signal strength of the first transmission frame, to provide a foundation for the first transmit power determined based on the first path loss. In addition, because the first path loss is prestored by the first device, the first device may directly obtain the first path loss from the storage unit. In this way, in comparison with a solution in which the first device calculates and determines the first path loss, resource consumption of the first device can be reduced.

In another example, the first path loss is determined based on path losses of a plurality of transmission frames between the AP and the first terminal device.

Optionally, the plurality of transmission frames may be a plurality of historical transmission frames between the AP and the first terminal device.

For example, the plurality of historical transmission frames each may be an uplink transmission frame or a downlink transmission frame. Further, the plurality of historical transmission frames each may be a data frame or a non-data frame. In this case, the plurality of historical transmission frames each may be any one of an uplink data frame, an uplink non-data frame, a downlink data frame, or a downlink non-data frame.

For example, a manner of obtaining any one of the plurality of historical transmission frames is similar to a manner of obtaining the first transmission frame. For details, refer to related descriptions of the first transmission frame. Details are not described herein again.

Optionally, the first path loss may be a statistical value of the path losses of the plurality of transmission frames, for example, an average value, a quantile value, or a weighted value.

For example, when the first path loss is the weighted value of the path losses of the plurality of transmission frames, weights of the path losses of the plurality of transmission frames may be predefined in a protocol, may be set by the AP before delivery (when the first device is not the AP, the AP may notify the first device of the weights), or may be preset.

For example, in this example, the first device may obtain the first path loss in the following two manners.

In a first possible implementation, the first device may determine the first path loss based on the path losses of the plurality of transmission frames.

Optionally, in this possible implementation, the path losses of the plurality of transmission frames are prestored by the first device. For example, during transmission of the plurality of transmission frames, the first device may separately determine and store the path losses of the plurality of transmission frames. Therefore, when obtaining the first path loss in step S501, the first device obtains the path losses of the plurality of transmission frames from a storage unit, to determine the first path loss based on the path losses of the plurality of transmission frames.

In a second possible implementation, the first path loss is prestored by the first device.

For example, during transmission of the plurality of transmission frames, the first device may separately determine the path losses of the plurality of transmission frames, and determine and store the first path loss based on the path losses of the plurality of transmission frames. Therefore, when obtaining the first path loss in step S501, the first device may directly obtain the first path loss from a storage unit.

Based on this possible implementation, the first path loss is determined based on the path losses of the plurality of transmission frames. In this way, in comparison with a solution in which the first device determines the first path loss based on a path loss of a single transmission frame, accuracy of the first path loss can be improved, so that accuracy of the first transmit power determined based on the first path loss is improved. In addition, because the first path loss is prestored by the first device, the first device may directly obtain the first path loss from the storage unit. In this way, in comparison with a solution in which the first device calculates and determines the first path loss, resource consumption of the first device can be reduced.

The foregoing describes the first path loss in the foregoing embodiments, and the following describes in detail the "received signal strength of the first transmission frame" in the foregoing embodiments.

Optionally, the received signal strength of the first transmission frame may be obtained in the following two manners.

In one implementation, the received signal strength of the first transmission frame may be notified to the first device by a device that receives the first transmission frame.

For example, because the first transmission frame is a transmission frame between the AP and the first terminal device, the device that receives the first transmission frame is the first terminal device, or the device that receives the first transmission frame is the AP. When the first transmission frame is a downlink transmission frame (for example, a downlink data frame or a downlink non-data frame), the device that receives the first transmission frame is the first terminal device. When the first transmission frame is an uplink transmission frame (for example, an uplink data frame or an uplink non-data frame), the device that receives the first transmission frame is the AP.

It may be understood that, when receiving a transmission frame, a device that receives the transmission frame may measure a received signal strength of the transmission frame, and then may notify the first device of the measured received signal strength of the first transmission frame.

Specifically, that the AP separately transmits link measurement (link measurement, LM) request frames to different terminal devices indicated by different identifiers is used as an example. When the AP separately transmits the LM request frames to the different terminal devices indicated by the different identifiers, the first device may determine, based on whether an identifier indicating a terminal device is the first identifier, whether an LM request frame transmitted between the AP and the terminal device indicated by the identifier is the first transmission frame, to determine whether a received signal strength of the LM request frame needs to be notified to the first device. When the identifier indicating the terminal device is the first identifier, it indicates that an LM request frame corresponding to the first identifier is an LM request frame transmitted between the AP and the first terminal device. In this case, the LM request frame corresponding to the first identifier is the first transmission frame. Therefore, when receiving the first transmission frame, the device that receives the first transmission frame may measure the received signal strength of the first transmission frame, and then may notify the first device of the measured received signal strength of the first transmission frame (that is, a transmission frame corresponding to the first identifier). When the identifier indicating the terminal device is not the first identifier, it indicates that the LM request frame corresponding to the identifier is not the LM request frame transmitted between the AP and the first terminal device. In this case, the LM request frame corresponding to the identifier is not the first transmission frame. Therefore, when receiving the transmission frame, a device that receives the transmission frame does not need to measure a received signal strength of the transmission frame, and does not need to notify the first device of the received signal strength of the transmission frame (that is, a transmission frame corresponding to the identifier).

Alternatively, when receiving the LM request frames, the terminal devices that receive the LM request frames respectively measure received signal strengths of the LM request frames received by the terminal devices, and notify the first device of the received signal strengths of the LM request frames, so that the first device can learn of the received signal strengths of the LM request frames from the different terminal devices. Because the terminal devices that receive the LM request frames include the first terminal device (that is, the device that receives the first transmission frame), the first device can learn of the received signal strength of the first transmission frame.

Optionally, when the first transmission frame is the uplink transmission frame (for example, the uplink data frame or the uplink non-data frame), the device that receives the first transmission frame is the AP, that is, the AP may measure the received signal strength of the first transmission frame, to notify the first device of the received signal strength of the first transmission frame. When the first transmission frame is the downlink transmission frame (for example, the downlink data frame or the downlink non-data frame), the device that receives the first transmission frame is the first terminal device, that is, the first terminal device may measure the received signal strength of the first transmission frame, to notify the first device of the received signal strength of the first transmission frame.

For example, when the first device is the AP, that the AP notifies the first device of the received signal strength of the first transmission frame may be understood as: The first device may directly learn of the received signal strength of the first transmission frame. When the first device is the another device other than the AP, that the AP notifies the first device of the received signal strength of the first transmission frame may be understood as: The AP sends the received signal strength of the first transmission frame to the first device. That the first terminal device notifies the first device of the received signal strength of the first transmission frame may be understood as: The first terminal device notifies the AP of the received signal strength of the first transmission frame, and the AP notifies the first device of the received signal strength of the first transmission frame.

Optionally, when the first transmission frame is the downlink transmission frame, the received signal strength of the first transmission frame may be carried in an uplink transmission frame, that is, the first terminal device indicates the received signal strength of the first transmission frame via the uplink transmission frame. For example, the uplink transmission frame is an LM report frame. In this case, the received signal strength of the first transmission frame may be indicated by using a received channel power indicator (received channel power indicator, RCPI) field in the LM report frame. In this case, it may also be considered that the received signal strength of the first transmission frame is determined based on the uplink transmission frame.

Specifically, as shown in FIG. 6, implementation in which the first terminal device notifies the AP of the received signal strength of the first transmission frame may include the following steps S601 and S602.

S601: The AP sends a first transmission frame to the first terminal device. Correspondingly, the first terminal device receives the first transmission frame from the AP.

Optionally, when receiving the first transmission frame, the first terminal device may measure a received signal strength of the first transmission frame.

S602: The first terminal device sends a second transmission frame to the AP. Correspondingly, the AP receives the second transmission frame from the first terminal device. The second transmission frame is an uplink transmission frame. In this case, it may be considered that the received signal strength of the first transmission frame is determined based on the second transmission frame.

Optionally, a frame type of the first transmission frame is the same as a frame type of the second transmission frame. For example, both the first transmission frame and the second transmission frame may be non-data frames, or both the first transmission frame and the second transmission frame may be data frames. For example, both the first transmission frame and the second transmission frame are LM frames, the first transmission frame may be an LM request frame, and the second transmission frame may be an LM report frame.

Based on this implementation, the device that receives the first transmission frame may notify the first device of the received signal strength of the first transmission frame, so that the first device may determine the first path loss based on the received signal strength of the first transmission frame and the transmit power of the first transmission frame, to provide a foundation for the first transmit power determined based on the first path loss.

In the other implementation, the received signal strength of the first transmission frame may be prestored by the first device.

Optionally, in this implementation, a device that receives the first transmission frame may notify the first device of the received signal strength of the first transmission frame, so that the first device can store the received signal strength of the first transmission frame.

Optionally, when the first transmission frame is an uplink transmission frame (for example, an uplink data frame or an uplink non-data frame), the device that receives the first transmission frame is the AP, that is, the AP notifies the first device of the received signal strength of the first transmission frame, so that the first device can store the received signal strength of the first transmission frame. When the first transmission frame is a downlink transmission frame (for example, a downlink data frame or a downlink non-data frame), the device that receives the first transmission frame is the first terminal device, that is, the first terminal device notifies the first device of the received signal strength of the first transmission frame, so that the first device can store the received signal strength of the first transmission frame.

For example, when the first device is the AP, that the AP notifies the first device of the received signal strength of the first transmission frame may be understood as: The first device may directly learn of the received signal strength of the first transmission frame. When the first device is the another device other than the AP, that the AP notifies the first device of the received signal strength of the first transmission frame may be understood as: The AP sends the received signal strength of the first transmission frame to the first device. Therefore, the first device may store the received signal strength of the first transmission frame.

For example, that the first terminal device notifies the first device of the received signal strength of the first transmission frame may be understood as: The first terminal device notifies the AP of the received signal strength of the first transmission frame, and after learning of the received signal strength of the first transmission frame, the AP may notify the first device of the received signal strength of the first transmission frame. Therefore, the first device may store the received signal strength of the first transmission frame.

In an example, that the first terminal device notifies the AP of the received signal strength of the first transmission frame may be understood as: The first terminal device in a plurality of terminal devices served by the AP notifies the AP of the received signal strength of the first transmission frame.

Optionally, in this example, the AP may send the first transmission frame to the first terminal device, so that the first terminal device can measure the received signal strength of the first transmission frame and notify the AP of the received signal strength of the first transmission frame. Alternatively, the AP may separately send transmission frames to the plurality of terminal devices served by the AP, and only the first terminal device in the plurality of terminal devices served by the AP measures the received signal strength of the first transmission frame and notifies the AP of the received signal strength of the first transmission frame. Therefore, the first device may store the received signal strength of the first transmission frame.

For example, the first transmission frame is an LM request frame. When the AP sends the first transmission frame to the first terminal device, and the first terminal device measures the received signal strength of the first transmission frame and notifies the AP of the received signal strength of the first transmission frame, for implementation thereof, refer to related descriptions of the foregoing steps S601 and S602. Details are not described herein again.

When the AP separately sends the transmission frames to the plurality of terminal devices served by the AP and only the first terminal device in the plurality of terminal devices served by the AP measures the received signal strength of the first transmission frame and notifies the AP of the received signal strength of the first transmission frame, during implementation of the foregoing steps S601 and S602, step S601 may be replaced with: The AP separately sends LM request frames to the plurality of terminal devices served by the AP. Correspondingly, the plurality of terminal devices respectively receive the LM request frames from the AP, where the plurality of terminal devices include the first terminal device. An LM request frame received by the first terminal device is the first transmission frame.

Based on this example, the first terminal device in the plurality of terminal devices served by the AP notifies the AP of the received signal strength of the first transmission frame. Therefore, after receiving the received signal strength of the first transmission frame, the AP does not need to determine whether the received signal strength of the first transmission frame is from the first terminal device, and may directly store the received signal strength of the first transmission frame, to reduce a delay in storing the received signal strength of the first transmission frame, and improve efficiency of storing the received signal strength of the first transmission frame.

In addition, during determining of the first path loss, the first device may directly obtain the received signal strength of the first transmission frame from the storage unit, to determine the first path loss based on the received signal strength of the first transmission frame and the transmit power of the first transmission frame. In this way, in comparison with a solution in which the first device obtains the received signal strength of the first transmission frame from the device that receives the first transmission frame, signaling interaction can be reduced, and overheads can be reduced.

In another example, that the first terminal device notifies the AP of the received signal strength of the first transmission frame may be understood as: A plurality of terminal devices served by the AP respectively notify the AP of received signal strengths of transmission frames from the AP. Because the plurality of terminal devices served by the AP include the first terminal device, the first terminal device also notifies the AP of a received signal strength of a transmission frame (that is, the first transmission frame) from the AP. Therefore, the first device may store the received signal strength of the first transmission frame.

For example, the first transmission frame is an LM request frame, and the second transmission frame is an LM report frame. During implementation of the foregoing steps S601 and S602, step S601 may be replaced with: The AP separately sends LM request frames to the plurality of terminal devices served by the AP. Correspondingly, the plurality of terminal devices respectively receive the LM request frames from the AP, where the plurality of terminal devices include the first terminal device. An LM request frame received by the first terminal device is the first transmission frame. Step S602 may be replaced with: The plurality of terminal devices respectively send LM report frames to the AP. Correspondingly, the AP separately receives the LM report frames from the plurality of terminal devices, where the LM report frames indicate received signal strengths of the LM request frames, and an LM report frame from the first terminal device is the second transmission frame.

Optionally, in this example, after receiving the LM report frames from the plurality of terminal devices, the AP may directly notify the first device of the plurality of LM report frames, or the AP may notify the first device of the second transmission frame in the plurality of LM report frames. Therefore, the first device may store the received signal strength of the first transmission frame.

For example, implementation in which the AP notifies the first device of the plurality of LM report frames or notifies the first device of the second transmission frame in the plurality of LM report frames is similar to implementation in which the AP notifies the first device of the received signal strength of the first transmission frame. For details, refer to related descriptions in which the AP notifies the first device of the received signal strength of the first transmission frame. Details are not described herein again.

Optionally, the first device or the AP may determine, based on an identifier indicated by an identifier field in an LM report frame, whether the LM report frame is the second transmission frame. Therefore, the first device may store the received signal strength of the first transmission frame indicated by the second transmission frame.

For example, the identifier field includes an identifier indicating a terminal device, or the identifier field indicates whether a terminal device that sends the LM report frame is the first terminal device. When the identifier field includes the identifier indicating the terminal device, the AP may compare at least one identifier in an identifier set, to determine whether the identifier that is included in the identifier field and that indicates the terminal device is the first identifier.

Specifically, the identifier field may be represented by using a 1-bit. When a value of the 1-bit is 1, it indicates that the identifier field indicates that the terminal device that sends the LM report frame is the first terminal device. Correspondingly, when the value of the 1-bit is 0, it indicates that the identifier field indicates that the terminal device that sends the LM report frame is not the first terminal device. Alternatively, when the value of the 1-bit is 1, it indicates that the identifier field indicates that the terminal device that sends the LM report frame is not the first terminal device. Correspondingly, when the value of the 1-bit is 0, it indicates that the identifier field indicates that the terminal device that sends the LM report frame is the first terminal device.

Based on this example, the plurality of terminal devices served by the AP respectively notify the AP of the received signal strengths of the transmission frames from the AP. Because the plurality of terminal devices served by the AP include the first terminal device, the first terminal device also notifies the AP of the received signal strength of the transmission frame (that is, the first transmission frame) from the AP. Therefore, the first device may store the received signal strength of the first transmission frame. Therefore, during determining of the first path loss, the first device may directly obtain the received signal strength of the first transmission frame from the storage unit, to determine the first path loss based on the received signal strength of the first transmission frame and the transmit power of the first transmission frame. In this way, in comparison with a solution in which the first device obtains the received signal strength of the first transmission frame from the device that receives the first transmission frame, signaling interaction can be reduced, and overheads can be reduced.

Based on the foregoing two examples, optionally, the first device may store the received signal strength of the first transmission frame in the following two manners.

In one possible implementation, the first device may replace a received signal strength of a historical first transmission frame in the storage unit with a received signal strength of a current first transmission frame, that is, a received signal strength of a unique first transmission frame exists in the storage unit.

For example, in this possible implementation, when obtaining the received signal strength of the first transmission frame from the storage unit, the first device can obtain the received signal strength of the unique first transmission frame, to determine the first path loss based on the received signal strength of the unique first transmission frame, and further determine the first transmit power.

For example, based on the foregoing descriptions, it can be learned that the identifiers indicating the plurality of terminal devices served by the AP include at least one first identifier, so that different first identifiers respectively correspond to received signal strengths of different first transmission frames. Therefore, a received signal strength of a first transmission frame respectively corresponding to the at least one first identifier in the storage unit may exist in a table form, a set form, or another form. This is not limited in embodiments of this application.

Specifically, for example, the received signal strength of the first transmission frame respectively corresponding to the at least one first identifier exists in the table form, and the first identifier is a MAC address of a terminal device. When the first transmission frame is a downlink non-data frame, the at least one first identifier and the received signal strength of the first transmission frame respectively corresponding to the at least one first identifier may include content shown in Table 3.

**Table 3**

| MAC address | Received signal strength of the first transmission frame |
|---|---|
| eee0-843d-4XX0 | -55 dBm |
| 82e5-55cf-cXXd | -50 dBm |
| 163b-a41d-bXXa | -54 dBm |
| ... | ... |

When the first transmission frame is an uplink non-data frame, the at least one first identifier and the received signal strength of the first transmission frame respectively corresponding to the at least one first identifier may include content shown in Table 4.

**Table 4**

| MAC address | Received signal strength of the first transmission frame |
|---|---|
| eee0-843d-4XX0 | -38 dBm |
| 82e5-55cf-cXXd | -45 dBm |
| 163b-a41d-bXXa | -42 dBm |
| ... | ... |

It should be noted that Table 3 and Table 4 merely list examples of possible implementation of the first identifier and the received signal strength of the first transmission frame. There may be another implementation of the first identifier and the received signal strength of the first transmission frame. This is not limited in embodiments of this application.

Based on this possible implementation, the first device may determine the first path loss based on the received signal strength of the unique first transmission frame, to determine the first transmit power. In other words, the received signal strength of the unique first transmission frame in the storage unit can provide a foundation for the determined first path loss and the further determined first transmit power. In addition, because the received signal strength of the unique first transmission frame is prestored by the first device, the first device may directly obtain the received signal strength of the unique first transmission frame from the storage unit. In this way, in comparison with a solution in which the first device obtains the received signal strength of the unique first transmission frame from the device that receives the first transmission frame, signaling interaction can be reduced, and overheads can be reduced.

In the other possible implementation, the first device may store a received signal strength of a current first transmission frame in the storage unit, that is, received signal strengths of a plurality of first transmission frames exist in the storage unit.

Optionally, in this possible implementation, when obtaining the received signal strength of the first transmission frame from the storage unit, the first device can obtain the received signal strengths of the plurality of first transmission frames, to determine a received signal strength of one first transmission frame based on the received signal strengths of the plurality of first transmission frames, determine the first path loss based on the received signal strength of the one first transmission frame, and further determine the first transmit power.

Optionally, the received signal strength of the one first transmission frame may be a statistical value of the received signal strengths of the plurality of first transmission frames, for example, an average value, a quantile value, or a weighted value.

For example, when the received signal strength of the one first transmission frame may be the weighted value of the received signal strengths of the plurality of first transmission frames, weights of the received signal strengths of the plurality of first transmission frames may be predefined in a protocol, may be set by the AP before delivery (when the first device is not the AP, the AP may notify the first device of the weights), or may be preset.

Based on this possible implementation, the first device may determine the received signal strength of the one first transmission frame based on the received signal strengths of the plurality of first transmission frames, to determine the first path loss. In this way, in comparison with a solution in which the first device determines the first path loss based on a received signal strength of a single first transmission frame, accuracy of the first path loss can be improved, and then accuracy of the first transmit power determined based on the first path loss can be further improved.

With reference to the foregoing two possible implementations, optionally, when obtaining a received signal strength of a new first transmission frame, the first device may update the received signal strength of the first transmission frame in the storage unit.

Based on this implementation, the first device prestores the received signal strength of the first transmission frame. Therefore, during determining of the first path loss, the first device may directly obtain the received signal strength of the first transmission frame from the storage unit, to determine the first path loss based on the received signal strength of the first transmission frame and the transmit power of the first transmission frame. In this way, in comparison with the solution in which the first device obtains the received signal strength of the first transmission frame from the device that receives the first transmission frame, signaling interaction can be reduced, and overheads can be reduced.

The foregoing describes the received signal strength of the first transmission frame in the foregoing embodiments, and the following describes in detail the "transmit power of the first transmission frame" in the foregoing embodiments.

Optionally, the transmit power of the first transmission frame may be obtained in the following three manners.

In a first possible implementation, the transmit power of the first transmission frame may be notified to the first device by a device that sends the first transmission frame.

For example, because the first transmission frame is a transmission frame between the AP and the first terminal device, the device that sends the first transmission frame may be the AP, or the device that sends the first transmission frame may be the first terminal device. When the first transmission frame is a downlink transmission frame (for example, a downlink data frame or a downlink non-data frame), the device that sends the first transmission frame is the AP. When the first transmission frame is an uplink transmission frame (for example, an uplink data frame or an uplink non-data frame), the device that sends the first transmission frame is the first terminal device.

It may be understood that, a transmit power of a transmission frame is known to a device that sends the transmission frame, that is, the transmit power of the first transmission frame is known to the device that sends the first transmission frame. Therefore, the device that sends the first transmission frame may notify the first device of the transmit power of the first transmission frame.

Specifically, that the AP separately transmits LM request frames to different terminal devices indicated by different identifiers is used as an example. When the AP separately transmits the LM request frames to the different terminal devices indicated by the different identifiers, the first device may determine, based on whether an identifier indicating a terminal device is the first identifier, whether an LM request frame transmitted between the AP and the terminal device indicated by the identifier is the first transmission frame, to determine whether a transmit power of the LM request frame needs to be notified to the first device. When the identifier indicating the terminal device is the first identifier, it indicates that an LM request frame corresponding to the first identifier is an LM request frame transmitted between the AP and the first terminal device. In this case, the LM request frame corresponding to the first identifier is the first transmission frame. Therefore, when sending the first transmission frame, the device that sends the first transmission frame may notify the first device of a measured transmit power of the first transmission frame (that is, a transmission frame corresponding to the first identifier). When the identifier indicating the terminal device is not the first identifier, it indicates that the LM request frame corresponding to the identifier is not the LM request frame transmitted between the AP and the first terminal device. In this case, the LM request frame corresponding to the identifier is not the first transmission frame. Therefore, when sending the transmission frame, a device that sends the transmission frame does not need to notify the first device of a transmit power of the transmission frame (that is, a transmission frame corresponding to the identifier).

Based on this possible implementation, the device that sends the first transmission frame may notify the first device of the transmit power of the first transmission frame, so that the first device may determine the first path loss based on the transmit power of the first transmission frame and the received signal strength of the first transmission frame, to provide a foundation for the first transmit power determined based on the first path loss.

In a second possible implementation, the transmit power of the first transmission frame may be determined based on a frame type of the first transmission frame.

For example, in this possible implementation, the transmit power of the first transmission frame may be implemented based on the following two cases.

Case 1: The first transmission frame is a downlink transmission frame. For example, the first transmission frame may be a downlink data frame or a downlink non-data frame.

Optionally, in Case 1, the transmit power of the first transmission frame is known to the AP. Therefore, the transmit power of the first transmission frame is notified to the first device by the AP.

For example, when the first device is the AP, that the transmit power of the first transmission frame is notified to the first device by the AP may be understood as: The first device may directly learn of the transmit power of the first transmission frame. When the first device is the another device other than the AP, that the transmit power of the first transmission frame is notified to the first device by the AP may be understood as: The transmit power of the first transmission frame is sent by the AP to the first device.

For example, implementation of the transmit power of the first transmission frame in this example is similar to implementation of the transmit power of the first transmission frame in the first possible implementation. For details, refer to related descriptions in the first possible implementation. Details are not described herein again.

Based on Case 1, because the first transmission frame may be the downlink transmission frame, the transmit power of the first transmission frame is known to the AP. Therefore, the AP may notify the first device of the transmit power of the first transmission frame, so that the first device may determine the first path loss based on the transmit power of the first transmission frame and the received signal strength of the first transmission frame, to provide a foundation for the first transmit power determined based on the first path loss.

Case 2: The first transmission frame is an uplink transmission frame. For example, the first transmission frame may be an uplink data frame or an uplink non-data frame.

In an example, the transmit power of the first transmission frame is notified to the first device by the first terminal device.

Optionally, in this example, the first terminal device may notify the AP of the transmit power of the first transmission frame, so that after learning of the transmit power of the first transmission frame, the AP may notify the first device of the transmit power of the first transmission frame.

For example, for implementation in which the AP notifies the first device of the transmit power of the first transmission frame, refer to related descriptions in Case 1. Details are not described herein again.

Based on this example, because the first transmission frame may be the uplink transmission frame, the transmit power of the first transmission frame is known to the first terminal device. Therefore, the first terminal device may notify the first device of the transmit power of the first transmission frame, so that the first device may determine the first path loss based on the transmit power of the first transmission frame and the received signal strength of the first transmission frame, to provide a foundation for the first transmit power determined based on the first path loss.

In another example, the transmit power of the first transmission frame is determined based on a transmit power of an uplink or downlink transmission frame whose frame type is different from the frame type of the first transmission frame.

For example, the transmit power of the first transmission frame may be determined based on a transmit power of a downlink non-data frame, or may be determined based on a transmit power of an uplink non-data frame. For ease of description, the uplink or downlink transmission frame whose frame type is different from the frame type of the first transmission frame is referred to as a "third transmission frame" for short below. This is described herein once for all, and details are not described again.

It may be understood that in this embodiment of this application, a purpose of determining the transmit power of the first transmission frame is to determine the first transmit power used for the data frame to be sent to the first terminal device. In other words, the first transmit power determined in this embodiment of this application is for sending the data frame. Therefore, the following uses an example in which the first transmission frame is an uplink data frame for description. Implementation of the transmit power of the first transmission frame when the first transmission frame is an uplink non-data frame is similar to the following implementation of the transmit power of the first transmission frame when the first transmission frame is the uplink data frame. For details, refer to related descriptions of the transmit power of the first transmission frame described below. Details are not described herein again.

In an implementation, the first transmission frame is the uplink data frame, and the third transmission frame is an uplink non-data frame.

Optionally, in this implementation, the transmit power of the first transmission frame is determined based on a transmit power of the third transmission frame and a first value. The first value is an error between the data frame and the non-data frame.

For example, the transmit power of the first transmission frame is a difference between the transmit power of the third transmission frame and the first value.

For example, when the first device is the AP, after obtaining the transmit power of the third transmission frame, a received signal strength of the third transmission frame, and the received signal strength of the first transmission frame, the AP may directly calculate the transmit power of the first transmission frame. When the first device is the another device other than the AP, after obtaining the transmit power of the third transmission frame, the received signal strength of the third transmission frame, and the received signal strength of the first transmission frame, the AP may notify the first device of the parameters; and the first device calculates the transmit power of the first transmission frame.

For example, the transmit power of the third transmission frame, the received signal strength of the third transmission frame, the received signal strength of the first transmission frame, and the transmit power of the first transmission frame may satisfy the following Relation (1): $\begin{matrix}The transmit power of the first transmission frame \\ = the transmit power of the first transmission frame \\ - the first value\end{matrix}$ Relation (1) where, the first value
= the received signal strength of the third transmission frame
- the received signal strength of the first transmission frame

For example, the received signal strength of the third transmission frame is -52 dBm, the transmit power of the third transmission frame is 32 dBm, and the received signal strength of the first transmission frame is -59 dBm. With reference to Relation (1), it can be learned that the first value is 7 dBm, and therefore, the transmit power of the first transmission frame is 25 dBm.

Optionally, the first value may be prestored by the first device, or may be calculated by the first device.

For example, implementation in which the first device prestores the first value is similar to implementation in which the first device prestores the first path loss. For details, refer to related descriptions in which the first device prestores the first path loss. Details are not described herein again.

It may be understood that the error between the data frame and the non-data frame is a difference between a received signal strength of the non-data frame and a received signal strength of the data frame. Therefore, when the first device calculates the first value, the first device may determine the first value based on the received signal strength of the third transmission frame and the received signal strength of the first transmission frame, to determine the transmit power of the first transmission frame based on the first value and the transmit power of the third transmission frame.

Optionally, because the third transmission frame is the uplink non-data frame, the transmit power of the third transmission frame is known to the first terminal device, so that the first terminal device may notify the first device of the transmit power of the third transmission frame. Alternatively, the transmit power of the third transmission frame is determined by the first device based on a second value and a transmit power of a downlink non-data frame whose frame type is the same as a frame type of the third transmission frame, where the second value is an error an uplink transmission frame and a downlink transmission frame that are of a same frame type. For ease of description, the downlink transmission frame whose frame type is the same as the frame type of the third transmission frame is referred to as a "fourth transmission frame" for short below. This is described herein once for all, and details are not described again.

For example, for implementation in which the first terminal device notifies the first device of the transmit power of the third transmission frame, refer to related descriptions in Case 1. Details are not described herein again.

Optionally, the transmit power of the third transmission frame is a difference between a transmit power of the fourth transmission frame and the second value.

For example, implementation of the second value is similar to implementation of the first value. For details, refer to related descriptions of the first value. Details are not described herein again.

It may be understood that the error between the uplink transmission frame and the downlink transmission frame that are of the same frame type is a difference between a received signal strength of the uplink transmission frame and a received signal strength of the downlink transmission frame. Therefore, when the first device calculates the second value, the first device may determine the second value based on the received signal strength of the uplink transmission frame and the received signal strength of the downlink transmission frame, to determine the transmit power of the third transmission frame based on the second value and the transmit power of the fourth transmission frame, and then determine the transmit power of the first transmission frame based on the first value and the transmit power of the third transmission frame.

For example, the received signal strength of the third transmission frame, a received signal strength of the fourth transmission frame, the transmit power of the fourth transmission frame, and the transmit power of the third transmission frame may satisfy the following Relation (2): $\begin{matrix}The transmit power of the third transmission frame \\ = the transmit power of the fourth transmission frame \\ - the second value\end{matrix}$ Relation (2) where, the second value
= the received signal strength of the fourth transmission frame
- the received signal strength of the third transmission frame

For example, the transmit power of the fourth transmission frame is 14 dBm, the received signal strength of the fourth transmission frame is -70 dBm, and the received signal strength of the third transmission frame is -52 dBm. With reference to Relation (2), it can be learned that the second value is -18 dBm, and therefore, the transmit power of the third transmission frame is 32 dBm.

After the transmit power of the third transmission frame is determined according to Relation (2), the transmit power of the first transmission frame may be determined according to Relation (1).

For example, for implementation of the received signal strength of the first transmission frame, the received signal strength of the third transmission frame, and the received signal strength of the fourth transmission frame, refer to related descriptions of the "received signal strength of the first transmission frame" described above. Details are not described herein again.

The following uses an example in which the first device is the AP to describe implementation in which the first device calculates the transmit power of the first transmission frame. Implementation of the transmit power of the first transmission frame when the first device is the another device other than the AP is similar to the following implementation of the transmit power of the first transmission frame when the first device is the AP. For details, refer to related descriptions of the transmit power of the first transmission frame described below. Details are not described herein again.

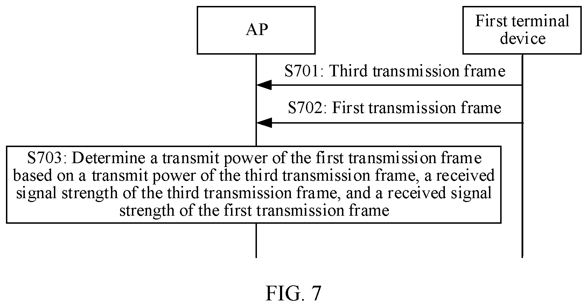

FIG. 7 is a flowchart of determining a transmit power of a first transmission frame according to an embodiment of this application. As shown in FIG. 7, an AP may determine the transmit power of the first transmission frame based on the following steps S701 to S703.

S701: A first terminal device sends a third transmission frame to the AP. Correspondingly, the AP receives the third transmission frame from the first terminal device.

For example, that the first terminal device sends the third transmission frame to the AP includes: The first terminal device sends the third transmission frame to the AP based on a transmit power of the third transmission frame.

Optionally, when receiving the third transmission frame, the AP may measure a received signal strength of the third transmission frame.

S702: The first terminal device sends the first transmission frame to the AP. Correspondingly, the AP receives the first transmission frame from the first terminal device.

Optionally, when receiving the first transmission frame, the AP may measure a received signal strength of the first transmission frame.

S703: The AP determines the transmit power of the first transmission frame based on the transmit power of the third transmission frame, the received signal strength of the third transmission frame, and the received signal strength of the first transmission frame.

Optionally, when the transmit power of the third transmission frame is notified to the AP by the first terminal device, the first transmission frame may further indicate the transmit power of the third transmission frame, or the transmit power of the third transmission frame is carried in information other than the first transmission frame. Therefore, the AP may determine the transmit power of the first transmission frame according to Relation (1).

Optionally, when the transmit power of the third transmission frame is determined based on a transmit power of a fourth transmission frame, before step S701, the procedure of determining the transmit power of the first transmission frame may further include step S704.

S704: The AP sends the fourth transmission frame to the first terminal device. Correspondingly, the first terminal device receives the fourth transmission frame from the AP.

Optionally, that the AP sends the fourth transmission frame to the first terminal device includes: The AP sends the fourth transmission frame to the first terminal device based on the transmit power of the fourth transmission frame.

Optionally, when receiving the fourth transmission frame, the first terminal device may measure a received signal strength of the fourth transmission frame. In this case, the third transmission frame in step S701 may indicate the received signal strength of the fourth transmission frame.

Optionally, before step S703, the AP may determine the transmit power of the third transmission frame based on the received signal strength of the third transmission frame, the received signal strength of the fourth transmission frame, and the transmit power of the fourth transmission frame. For example, the AP may determine the transmit power of the third transmission frame according to Relation (2).

For example, in steps S701 and S704, the fourth transmission frame may be an LM request frame, and the third transmission frame may be an LM report frame. In this case, the received signal strength of the fourth transmission frame may be indicated by using an RCPI field in the LM report frame. Specifically, implementation of the fourth transmission frame is similar to implementation of the first transmission frame in step S601. For details, refer to related descriptions of step S601. Implementation of the third transmission frame is similar to implementation of the second transmission frame in step S602. For details, refer to related descriptions of step S602. Details are not described herein again.

Based on this implementation, when the first transmission frame is the uplink data frame, the first device may determine the transmit power of the first transmission frame based on the transmit power of the uplink non-data frame and the error (that is, the first value) between the data frame and the non-data frame, to provide a foundation for the first path loss determined based on the transmit power of the first transmission frame and the received signal strength of the first transmission frame and the first transmit power further determined based on the first path loss and the received signal strength threshold of the first terminal device.

In another implementation, the first transmission frame is the uplink data frame, and the third transmission frame is a downlink non-data frame.

Optionally, in this implementation, the transmit power of the first transmission frame is determined based on the transmit power of the third transmission frame, an error (that is, a second value) between a downlink transmission frame and an uplink transmission frame that are of a same frame type, and an error (that is, a first value) between the data frame and the non-data frame.

For example, the transmit power of the first transmission frame is a difference between the transmit power of the third transmission frame, the second value, and the first value.

For example, because the third transmission frame is the downlink data frame, the transmit power of the third transmission frame is known to the AP, so that the AP may notify the first device of the transmit power of the third transmission frame. Implementation of the first value and the second value is similar to implementation of the first value and the second value in the foregoing implementation. For details, refer to related descriptions in the foregoing implementation. Details are not described herein again.

Based on this implementation, when the first transmission frame is the uplink data frame, the first device may determine the transmit power of the first transmission frame based on the transmit power of the downlink non-data frame and the error (that is, the first value) between the data frame and the non-data frame. Because the first transmission frame is the uplink data frame, the transmit power of the first transmission frame is known to the first terminal device. However, accuracy of the transmit power of the first transmission frame reported by the terminal device is lower. Therefore, the first device may calculate and determine the transmit power of the first transmission frame based on the known transmit power of the downlink non-data frame and the error (that is, the first value) between the data frame and the non-data frame. In this way, in comparison with a solution in which the first terminal device reports the transmit power of the first transmission frame to a first device, the accuracy of the transmit power of the first transmission frame can be improved, thereby improving accuracy of the first path loss determined based on the transmit power of the first transmission frame and the received signal strength of the first transmission frame, and further improving accuracy of the first transmit power determined based on the first path loss and the received signal strength threshold of the first terminal device.

In a third possible implementation, the transmit power of the first transmission frame may be prestored by the first device.

For example, in this possible implementation, the first device may determine the transmit power of the first transmission frame based on the foregoing two possible implementations, to store the transmit power of the first transmission frame.

Based on this possible implementation, the first device prestores the transmit power of the first transmission frame. Therefore, during determining of the first path loss, the first device may directly obtain the transmit power of the first transmission frame from the storage unit, to determine the first path loss based on the received signal strength of the first transmission frame and the transmit power of the first transmission frame. In this way, in comparison with the solution in which the first device obtains the transmit power of the first transmission frame from the device that receives the first transmission frame, signaling interaction can be reduced, and overheads can be reduced.

The foregoing describes the transmit power of the first transmission frame in the foregoing embodiments, and the following describes in detail the "received signal strength threshold of the first terminal device" in the foregoing embodiments.

For example, the received signal strength threshold of the first terminal device may be implemented in the following two manners.

In a first possible implementation, the received signal strength threshold of the first terminal device may be determined based on at least one receiver sensitivity. In other words, the first device may determine the received signal strength threshold of the first terminal device based on the at least one receiver sensitivity.

For example, a receiver sensitivity of a terminal device indicates a minimum received signal strength required by the terminal device to demodulate a transmission frame received by the terminal device. Therefore, a received signal strength threshold of the terminal device may be represented by using the receiver sensitivity. In other words, in this case, the received signal strength threshold of the first terminal device is a received signal strength required by the first terminal device to demodulate a transmission frame received by the first terminal device.

Optionally, the received signal strength threshold of the first terminal device is a first receiver sensitivity in the at least one receiver sensitivity. The first receiver sensitivity is a largest sensitivity in the at least one receiver sensitivity, or the first receiver sensitivity is any one of the at least one receiver sensitivity.

For example, the at least one receiver sensitivity includes -63 decibel-milliwatts (decibel-milliwatts, dBm), -61 dBm, -54 dBm, and -51 dBm. When the first receiver sensitivity is the largest receiver sensitivity in the at least one receiver sensitivity, the first receiver sensitivity is -51 dBm. When the first receiver sensitivity is any one of the at least one receiver sensitivity, the first receiver sensitivity is any one of -63 dBm, -61 dBm, -54 dBm, and -51 dBm.

Optionally, the at least one receiver sensitivity may be implemented based on the following two examples.

In one example, the at least one receiver sensitivity may be predefined. For example, when the at least one receiver sensitivity is predefined, the at least one receiver sensitivity may be predefined in a protocol, may be set by the first terminal device before delivery, or may be default between the first device and the first terminal device. For example, the at least one receiver sensitivity may be one or more receiver sensitivities supported by the first terminal device.

In the other example, the at least one receiver sensitivity may be determined based on at least one modulation and coding scheme (modulation and coding scheme, MCS). For example, the at least one MCS is in one-to-one correspondence with the at least one receiver sensitivity, that is, each of the at least one MCS corresponds to one of the at least one receiver sensitivity. In this case, the first receiver sensitivity may be a first receiver sensitivity corresponding to a first MCS in the at least one MCS. The first receiver sensitivity may be a receiver sensitivity corresponding to an MCS with a largest value in the at least one MCS, or the first MCS may be a receiver sensitivity corresponding to any one of the at least one MCS.

For example, different values of an MCS indicate different modulation schemes. For example, a transmission bandwidth of a terminal device is 40 megahertz (megahertz, MHz). When a value of an MCS is 0, a corresponding modulation scheme is binary phase shift keying (binary phase shift keying, BPSK). When the value of the MCS is 1 or 2, the corresponding modulation scheme is quadrature phase shift keying (quadrature phase shift keying, QPSK). When the value of the MCS is 3 or 4, the corresponding modulation scheme is 16-quadrature amplitude modulation (quadrature amplitude modulation, QAM). When the value of the MCS is any one of 5 to 7, the corresponding modulation scheme is 64-QAM modulation. When the value of the MCS is 8 or 9, the corresponding modulation scheme is 256-QAM modulation. When the value of the MCS is 10, the corresponding modulation scheme is 1024-QAM modulation. Specifically, modulation schemes and receiver sensitivities meet content shown in Table 5.

**Table 5**

| Modulation scheme | | Rate | Receiver sensitivities under different transmission bandwidths | | | |
|---|---|---|---|---|---|---|
| Single carrier modulation | Dual carrier modulation | | 20 MHz | 40 MHz | 80 MHz | 160 MHz |
| / | BPSK | 1/2 | -82 | -79 | -76 | -73 |
| BPSK | QPSK | 1/2 | -82 | -79 | -76 | -73 |
| QPSK | 16-QAM | 1/2 | -79 | -74 | -73 | -70 |
| QPSK | 16-QAM | 3/4 | -77 | -71 | -71 | -68 |
| 16-QAM | / | 1/2 | -74 | -67 | -68 | -65 |
| 16-QAM | / | 3/4 | -70 | -63 | -64 | -61 |
| 64-QAM | / | 2/3 | -66 | -62 | -60 | -57 |
| 64-QAM | / | 3/4 | -65 | -61 | -59 | -56 |
| 64-QAM | / | 5/6 | -64 | -56 | -58 | -55 |
| 256-QAM | / | 3/4 | -59 | -54 | -53 | -50 |
| 256-QAM | / | 5/6 | -57 | -54 | -51 | -48 |
| 1024-QAM | / | 3/4 | -54 | -51 | -48 | -45 |
| 1024-QAM | / | 5/6 | -52 | -49 | -46 | -43 |

It can be learned from Table 5 that the receiver sensitivity is related to three parameters: the modulation scheme, the rate, and the transmission bandwidth. In other words, the at least one receiver sensitivity is determined based on the modulation scheme, the rate, and the transmission bandwidth. For example, when the rate is 3/4, the transmission bandwidth is 40 MHz, and values of MCSs included in the at least one MCS include 7, 8, 9, and 10, with reference to the relationship between the values of the MCSs and the modulation schemes, it can be learned that in this case, it indicates that a modulation scheme of the at least one MCS includes 64-QAM, 256-QAM, and 1024-QAM, and correspondingly, the at least one receiver sensitivity includes -61 dBm, -54 dBm, and -51 dBm.

Optionally, when the first device learns of only the at least one MCS and the transmission bandwidth, the rate may be a maximum rate corresponding to the modulation scheme by default, so that each modulation scheme can correspond to a unique receiver sensitivity.

For example, values of MCSs included in the at least one MCS include 7, 8, 9, and 10, and the transmission bandwidth is 40 MHz. When a value of an MCS is 7, a modulation scheme is 64-QAM modulation. With reference to Table 5, it can be learned that a maximum rate corresponding to 64-QAM modulation is 5/6, so that a receiver sensitivity is -56 dBm. When the value of the MCS is 8 or 9, the modulation scheme is 256-QAM modulation. With reference to Table 5, it can be learned that a maximum rate corresponding to 256-QAM modulation is 5/6, so that the receiver sensitivity is -54 dBm. When the value of the MCS is 10, the modulation scheme is 1024-QAM modulation. With reference to Table 5, it can be learned that a maximum rate corresponding to 1024-QAM modulation is 5/6, so that the receiver sensitivity is -49 dBm. In this case, the at least one receiver sensitivity includes -56 dBm, -54 dBm, and -49 dBm.

It may be understood that Table 5 describes an example of relationships between the modulation schemes and the receiver sensitivities. Actually, a value of the receiver sensitivity in Table 5 may alternatively be another value. This is not limited in embodiments of this application.

Based on this possible implementation, the first device may determine the first receiver sensitivity based on the at least one receiver sensitivity, to provide a foundation for the first transmit power determined based on the first receiver sensitivity.

In a second possible implementation, the received signal strength threshold of the first terminal device may be determined based on at least one signal-to-noise ratio threshold. In other words, the first device may determine the received signal strength threshold of the first terminal device based on the at least one signal-to-noise ratio threshold.

For example, a signal-to-noise ratio in the signal-to-noise ratio threshold may be a signal-to-noise ratio (signal-to-noise ratio, SNR), or may be a signal to interference plus noise ratio (signal to interference plus noise ratio, SINR).

Optionally, that the received signal strength threshold of the first terminal device is determined based on the at least one signal-to-noise ratio threshold includes: The received signal strength threshold of the first terminal device is determined based on a first signal-to-noise ratio threshold in the at least one signal-to-noise ratio threshold. The first signal-to-noise ratio threshold may be a largest signal-to-noise ratio threshold in the at least one signal-to-noise ratio threshold, or the first signal-to-noise ratio threshold may be any one of the at least one signal-to-noise ratio threshold.

For example, the at least one signal-to-noise ratio threshold includes 22.5 dBm, 24.5 dBm, 27.5 dBm, and 29.5 dBm. The first signal-to-noise ratio threshold is the largest signal-to-noise ratio threshold in the at least one signal-to-noise ratio threshold, that is, the first signal-to-noise ratio threshold may be 29.5 dBm. Alternatively, the first signal-to-noise ratio threshold is any one of the at least one signal-to-noise ratio threshold, that is, the first signal-to-noise ratio threshold may be any one of 22.5 dBm, 24.5 dBm, 27.5 dBm, and 29.5 dBm.

Optionally, the at least one signal-to-noise ratio threshold may be implemented based on the following two examples.

In one example, the at least one signal-to-noise ratio threshold may be predefined. For example, the at least one signal-to-noise ratio threshold may be predefined in a protocol, may be set by the first terminal device before delivery, or may be default between the first device and the first terminal device. For example, the at least one signal-to-noise ratio threshold may be one or more signal-to-noise ratio thresholds sorted in descending order of a plurality of signal-to-noise ratio thresholds supported by the first terminal device.

In the other example, the at least one signal-to-noise ratio threshold may be determined based on at least one MCS. For example, the at least one MCS is in one-to-one correspondence with the at least one signal-to-noise ratio threshold, that is, each of the at least one MCS corresponds to one of the at least one signal-to-noise ratio threshold. In this case, the first signal-to-noise ratio threshold may be a first signal-to-noise ratio threshold corresponding to a first MCS in the at least one MCS. The first MCS may be a signal-to-noise ratio threshold corresponding to an MCS with a largest value in the at least one MCS, or the first MCS may be a signal-to-noise ratio threshold corresponding to any one of the at least one MCS.

Specifically, based on whether the first terminal device supports a low-density parity-check code (low-density parity-check code, LDPC), MCSs and signal-to-noise ratio thresholds meet a relationship shown in Table 6. In other words, the at least one signal-to-noise ratio threshold is determined based on the MCS and whether the terminal device supports the LDPC. In other words, the first signal-to-noise ratio threshold may be determined based on two parameters: the MCS and whether the terminal device supports the LDPC.

**Table 6**

| SNR | | MCS |
|---|---|---|
| LDPC supported | LDPC not supported | |
| -1.9 | 1.76 | 0 |
| 2.9 | 4.85 | 1 |
| 5.3 | 7.3 | 2 |
| 8.2 | 10.53 | 3 |
| 11.7 | 13.74 | 4 |
| 15.7 | 17.96 | 5 |
| 17.2 | 19.38 | 6 |
| 19 | 20.74 | 7 |
| 22.5 | 24.79 | 8 |
| 24.5 | 26.28 | 9 |
| 27.5 | 30.3 | 10 |
| 29.5 | 31.85 | 11 |

When values of MCSs included in the at least one MCS includes 7, 8, 9, 10, and 11, if the first terminal device supports the LDPC, with reference to Table 6, it can be learned that the at least one signal-to-noise ratio threshold includes 20.74 dBm, 24.79 dBm, 26.28 dBm, 30.3 dBm, and 31.85 dBm. Further, the received signal strength threshold of the first terminal device may be determined based on the at least one signal-to-noise ratio threshold.

Optionally, whether the first terminal device supports the LDPC may be notified to the first device by the first terminal device, may be default by the first device, or may be preset.

It may be understood that Table 6 describes a relationship between the MCSs and the signal-to-noise ratio thresholds by using only an example in which a highest modulation order of an MCS is 11. Actually, the highest modulation order of the MCS may alternatively be another value. Similarly, the value of the signal-to-noise ratio threshold in Table 6 may alternatively be another value. This is not limited in embodiments of this application.

Optionally, in this possible implementation, the received signal strength threshold of the first terminal device may be implemented based on the following examples.

In an example, the received signal strength threshold of the first terminal device may be the first signal-to-noise ratio threshold.

Optionally, the signal-to-noise ratio threshold indicates a difference between a received signal strength required by a terminal device to demodulate a transmission frame received by the terminal device and a noise value on a transmission path of the transmission frame. For example, when the transmission path of the transmission frame remains unchanged, it may be considered that the signal-to-noise ratio threshold is positively correlated with the received signal strength required by the terminal device to demodulate the transmission frame received by the terminal device. Therefore, a received signal strength threshold of the terminal device may be represented by using the signal-to-noise ratio threshold. In this case, that the received signal strength threshold of the first terminal device indicates a received signal strength required by the first terminal device to demodulate a transmission frame received by the first terminal device may be understood as: The received signal strength threshold of the first terminal device indicates the signal-to-noise ratio threshold, where the signal-to-noise ratio threshold is for determining the received signal strength required by the terminal device to demodulate the transmission frame received by the terminal device.

Optionally, in this example, that the first device determines the first transmit power based on the first path loss and the received signal strength threshold of the first terminal device in step S502 includes: The first device determines the first transmit power based on a plurality of parameters. The plurality of parameters include the first path loss, the first noise ratio threshold, and a first noise value. The first noise value is a magnitude of noise between the AP and the first terminal device.

Optionally, that the first transmit power is the sum of the plurality of parameters includes: The first transmit power is a sum of three parameters: the first path loss, the first noise ratio threshold, and the first noise value.

Optionally, the first noise value is measured by the AP, or may be predefined.

In the other example, the received signal strength threshold of the first terminal device may be a sum of the first signal-to-noise ratio threshold and a first noise value.

Optionally, with reference to related descriptions of the "noise ratio threshold" and the "noise value" in the foregoing example, it can be learned that the received signal strength required by the terminal device to demodulate the transmission frame received by the terminal device is a sum of the noise ratio threshold and the noise value. Therefore, the received signal strength threshold of the terminal device may be represented by using the sum of the noise ratio threshold and the noise value. In other words, in this case, the received signal strength threshold of the first terminal device is a received signal strength required by the first terminal device to demodulate a transmission frame received by the first terminal device.

Optionally, in this example, the first device may determine the first transmit power based on two parameters: the received signal strength threshold of the first terminal device and the first path loss. For example, the first transmit power may be a sum of the first path loss and the received signal strength threshold of the first terminal device.

Based on this possible implementation, the first device may determine the first noise ratio threshold based on the at least one signal-to-noise ratio threshold, to provide a foundation for the first transmit power determined based on the first signal-to-noise ratio threshold.

With reference to the foregoing two possible implementations, for example, the first device may determine, based on a value relationship between a signal-to-noise ratio threshold and a signal-to-noise ratio between a receive end device and a transmit end device, whether to determine the received signal strength threshold of the first terminal device based on the at least one receiver sensitivity, or determine the received signal strength threshold of the first terminal device based on the at least one signal-to-noise ratio threshold. For example, when the signal-to-noise ratio is greater than the signal-to-noise ratio threshold, the received signal strength threshold of the first terminal device may be determined based on the at least one receiver sensitivity. When the signal-to-noise ratio is less than or equal to the signal-to-noise ratio threshold, the received signal strength threshold of the first terminal device may be determined based on the at least one signal-to-noise ratio threshold.

With reference to the foregoing two possible implementations, optionally, the at least one MCS may be obtained in the following two manners.

In one implementation, the at least one MCS may be predefined. For example, when the at least one MCS is predefined, the at least one MCS may be predefined in a protocol, the at least one MCS may be set by the first terminal device before delivery, or the at least one MCS may be default between the AP and the first terminal device.

Optionally, the at least one MCS may be one or more of a plurality of MCSs supported by the first terminal device.

For example, terminal devices that support different protocols correspond to different MCSs. Therefore, in different protocols, the at least one MCS corresponding to the first terminal device is different. For example, the protocol supported by the first terminal device includes but is not limited to one or more of the following: 802.11ax, 802.11ac, 802.11n, 802.11g, 802.11b, and 802.11a.

For example, based on the foregoing descriptions, it can be learned that the first terminal device may include one or more terminal devices. When the first terminal device includes a plurality of terminal devices, and the plurality of terminal devices support different protocols, the first device may determine at least one MCS corresponding to each of the plurality of terminal devices, to determine, based on the at least one MCS corresponding to each of the plurality of terminal devices, a first transmit power corresponding to each of the plurality of terminal devices. In other words, in this case, the plurality of terminal devices correspond to different first transmit powers. Alternatively, the first device may determine at least one MCS corresponding to a specific terminal device in the plurality of terminal devices, to determine a first transmit power based on the at least one MCS. In other words, in this case, the plurality of terminal devices correspond to a same first transmit power. For example, the first device may select, in the at least one MCS corresponding to each of the plurality of terminal devices, at least one MCS in which an MCS with a largest value is located, to determine the first transmit power based on the at least one MCS.

Optionally, in a specific protocol, the at least one MCS may be X MCSs sorted in descending order of values in the plurality of MCSs supported by the first terminal device, where a value of X is a positive integer. In this case, the first MCS is an MCS with a largest value in the X MCSs supported by the first terminal device, or the first MCS is any one of the X MCSs supported by the first terminal device. For example, in a specific protocol, a largest value of an MCS in the plurality of MCSs supported by the first terminal device is 11. If the value of X is 3, the at least one MCS includes MCSs whose values are 9, 10, and 11.

In the other implementation, the at least one MCS may be determined based on a rate requirement of the first terminal device.

Optionally, the first terminal device may notify the first device of the rate requirement of the first terminal device, so that the first device determines the at least one MCS based on the rate requirement, and further determines the at least one receiver sensitivity or the at least one signal-to-noise ratio threshold based on the at least one MCS. In this way, the first receiver sensitivity or the first signal-to-noise ratio threshold can be determined, so that the first transmit power can be determined based on the first receiver sensitivity or the first signal-to-noise ratio threshold.

For example, the first MCS is an MCS with a largest value in the at least one MCS corresponding to the rate requirement, or the first MCS is any one of the at least one MCS corresponding to the rate requirement.

For example, different rate requirements correspond to different at least one MCS. Specifically, correspondences between rate requirements and at least one MCS corresponding to the rate requirements may include content shown in Table 7.

**Table 7**

| Rate requirement | MCS |
|---|---|
| Rate requirement #1 | MCS #1 |
| | MCS #2 |
| Rate requirement #2 | MCS #3 |
| | MCS #4 |
| | MCS #5 |
| Rate requirement #3 | MCS #6 |
| ... | ... |

For example, if the rate requirement of the first terminal device is the rate requirement #1, the at least one MCS includes the MCS #1 and the MCS #2, and the MCS #3. If the rate requirement of the first terminal device is the rate requirement #2, the at least one MCS includes the MCS #3, the MCS #4 and the MCS #5. If the rate requirement of the first terminal device is the rate requirement #3, the at least one MCS includes the MCS #6.

After determining the at least one MCS based on Table 7, the first device may determine the at least one receiver sensitivity with reference to Table 5, or determine the at least one signal-to-noise ratio threshold with reference to Table 6. Further, the first receiver sensitivity or the first signal-to-noise ratio threshold is determined, so that the first transmit power may be determined based on the first receiver sensitivity or the first signal-to-noise ratio threshold.

It should be noted that the foregoing example is described by using only an example in which an implementation form of the correspondences between different rate requirements and at least one MCS is a table form. The implementation form of the correspondences between different rate requirements and at least one MCS may alternatively be another form other than the table form, for example, a set form. This is not limited in embodiments of this application.

Optionally, in the foregoing embodiments, the AP may further send the data frame to the first terminal device on a first frequency band. In other words, that the AP sends, based on the first transmit power, the data frame to the first terminal device indicated by the first identifier in step S202 includes: The AP sends, based on the first transmit power, the data frame to the first terminal device on the first frequency band.

For example, when the first terminal device has a downlink requirement, that is, when the AP is about to send the data frame to the first terminal device, the AP may add the first identifier to a downlink queue, and determine a scheduling mode of the first device, to configure a corresponding downlink resource (that is, the first frequency band) based on the scheduling mode, and then send the data frame on the downlink resource. In other words, the first frequency band is determined based on the scheduling mode of the first terminal device.

Optionally, a scheduling mode of a terminal device is determined based on whether the terminal device meets an orthogonal frequency division multiple access (orthogonal frequency division multiple access, OFDMA) scheduling condition and whether the terminal device meets a multi-user scheduling condition.

OFDMA scheduling means that an entire frequency band of the AP is divided into a plurality of sub-bands, and each sub-band may be for scheduling a different terminal device. That the OFDMA scheduling condition is met may be understood as: The AP may schedule the terminal device on a sub-band. In this case, it may also be considered that the scheduling mode of the terminal device is sub-band scheduling. That the OFDMA scheduling condition is not met may be understood as: The entire frequency band of the AP cannot be divided into a plurality of sub-bands, so that the AP schedules the terminal device on the full band. In this case, it may also be considered that the scheduling mode of the terminal device is full-band scheduling.

Multi-user scheduling means that the downlink resource (for example, the first frequency band) configured for the terminal device supports spatial division multiplexing, that is, means whether the downlink resource can be used for scheduling of a plurality of terminal devices associated with a plurality of users in spatial domain. That the multi-user scheduling condition is met may be understood as: The downlink resource supports spatial division multiplexing, and can be used for scheduling of the plurality of terminal devices associated with the plurality of users. In this case, it may also be considered that the scheduling mode of the downlink resource (or the terminal device) is multi-user scheduling. That the multi-user scheduling condition is not met may be understood as: The downlink resource does not support spatial division multiplexing, and cannot be used for scheduling of the plurality of terminal devices associated with the plurality of users. In other words, the downlink resource can be used for scheduling of only a terminal device associated with a single user. In this case, it may also be considered that the scheduling mode of the downlink resource (or the terminal device) is single-user scheduling.

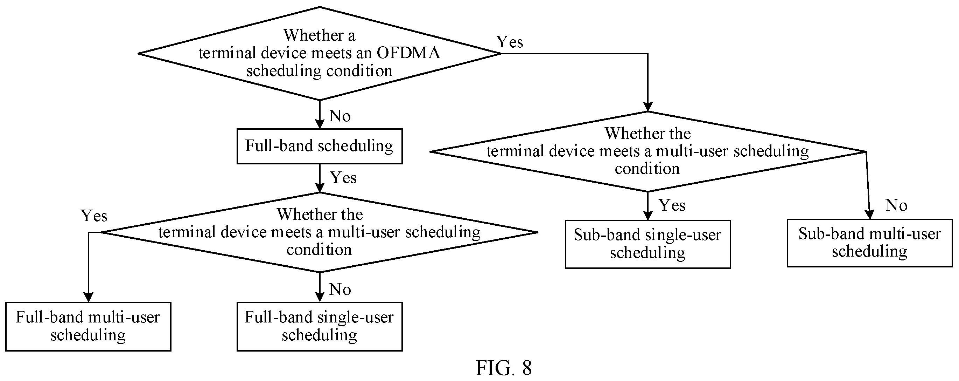

FIG. 8 is a schematic flowchart of determining, by an AP, a scheduling mode of a terminal device according to an embodiment of this application.

As shown in FIG. 8, first, the AP may determine whether the terminal device meets an OFDMA scheduling condition, to determine whether full-band scheduling or sub-band scheduling is used for the terminal device. Further, the AP may determine whether the terminal device meets a multi-user scheduling condition, to determine whether multi-user scheduling or single-user scheduling is used for the terminal device. When the terminal device meets the OFDMA scheduling condition and the multi-user scheduling condition, the scheduling mode of the terminal device is sub-band multi-user scheduling. When the terminal device meets the OFDMA scheduling condition and does not meet the multi-user scheduling condition, the scheduling mode of the terminal device is sub-band single-user scheduling. When the terminal device does not meet the OFDMA scheduling condition and meets the multi-user scheduling condition, the scheduling mode of the terminal device is full-band multi-user scheduling. When the terminal device does not meet the OFDMA scheduling condition and does not meet the multi-user scheduling condition, the scheduling mode of the terminal device is full-band single-user scheduling.

Optionally, the scheduling mode of the first terminal device is full-band single-user scheduling, that is, the first frequency band may be the entire frequency band of the AP, and the first frequency band does not support spatial division multiplexing.

For example, because the first frequency band is the entire frequency band of the AP, in a process in which the AP sends the data frame to the first terminal device on the first frequency band, interaction with another terminal device other than the first terminal device is suspended.

Based on this optional solution, because the scheduling mode of the first terminal device is full-band single-user scheduling, when the AP sends the data frame to the first terminal device on the first frequency band, interaction with the another terminal device other than the first terminal device needs to be suspended. In this way, interference caused by the another terminal device to the first terminal device can be avoided when the AP interacts with the first terminal device, to ensure bandwidth of the first terminal device.

It may be understood that, in the foregoing embodiments, the method and/or the steps implemented by the first device may alternatively be implemented by a component (for example, a processor, a chip, a chip system, a circuit, a logical module, or software) that can be used in the first device, and the method and/or the steps implemented by the terminal device may alternatively be implemented by a component (for example, a processor, a chip, a chip system, a circuit, a logical module, or software) that can be used in the terminal device. The chip system may include a chip, or the chip system may include a chip and another discrete device.

It may be understood that, to implement the foregoing functions, a communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, module division is an example, and is merely a logical function division. In actual implementation, another division manner may be used.

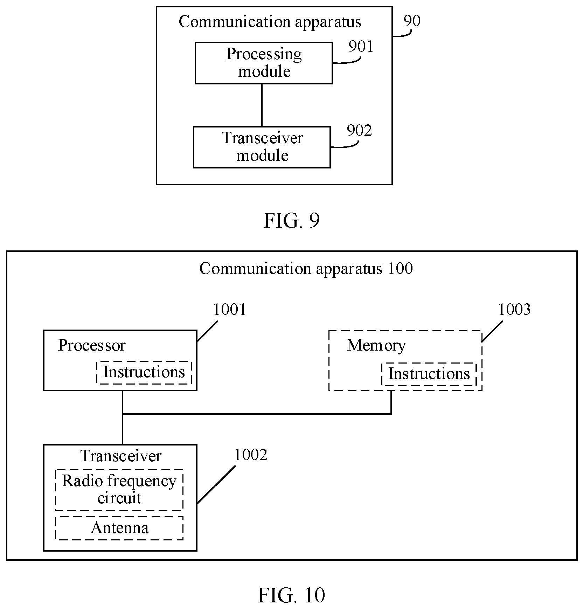

FIG. 9 is a diagram of a structure of a communication apparatus 90. The communication apparatus 90 includes a processing module 901 and a transceiver module 902. The communication apparatus 90 may be configured to implement functions of the foregoing first device or terminal device.

In some embodiments, the communication apparatus 90 may further include a storage module (not shown in FIG. 9), configured to store program instructions and data.

In some embodiments, the transceiver module 902 may also be referred to as a transceiver unit, and is configured to implement a sending function and/or a receiving function. The transceiver module 902 may include a transceiver circuit, a transceiver device, a transceiver, or a communication interface.

In some embodiments, the transceiver module 902 may include a receiving module and a sending module, respectively configured to perform receiving and sending steps performed by the first device or the terminal device in the foregoing method embodiments and/or configured to support another process of the technology described in this specification. The processing module 901 may be configured to perform processing (for example, determining) steps performed by the first device or the terminal device in the foregoing method embodiments and/or configured to support another process of the technology described in this specification.

When the communication apparatus 90 is configured to implement functions of the foregoing AP,
in some embodiments, the processing module 901 is configured to obtain a first identifier; and the transceiver module 902 is configured to send, based on a first transmit power, a data frame to a first terminal device indicated by the first identifier.

Optionally, the processing module 901 is further configured to obtain a second identifier; and the transceiver module 902 is further configured to send, based on a second transmit power, a data frame to a second terminal device indicated by the second identifier.

Optionally, the first transmit power is greater than a first threshold.

Optionally, the first transmit power is determined based on a first path loss and a received signal strength threshold of the first terminal device, where the first path loss is a path loss of a transmission frame between the first terminal device and the access point AP associated with the first terminal device.

Optionally, the first path loss is determined based on a transmit power of a first transmission frame and a received signal strength of the first transmission frame.

Optionally, the first path loss is a difference between the transmit power of the first transmission frame and the received signal strength of the first transmission frame.

Optionally, the first transmission frame is a downlink transmission frame, the received signal strength of the first transmission frame is determined based on a second transmission frame, the second transmission frame indicates the received signal strength of the first transmission frame, and the second transmission frame is an uplink transmission frame.

Optionally, the first transmission frame is an uplink transmission frame, the transmit power of the first transmission frame is determined based on a transmit power of a third transmission frame, and a frame type of the third transmission frame is different from a frame type of the first transmission frame.

Optionally, the first transmission frame is an uplink data frame, and the third transmission frame is an uplink non-data frame. That the transmit power of the first transmission frame is determined based on the transmit power of the third transmission frame includes: The transmit power of the first transmission frame is determined based on the transmit power of the third transmission frame and a first value, where the first value is an error between the data frame and the non-data frame.

Optionally, the transmit power of the first transmission frame is a difference between the transmit power of the third transmission frame and the first value.

Optionally, the first transmission frame is an uplink data frame, and the third transmission frame is a downlink non-data frame. That the transmit power of the first transmission frame is determined based on the transmit power of the third transmission frame includes: The transmit power of the first transmission frame is determined based on the transmit power of the third transmission frame, a first value, and a second value, where the first value is an error between the data frame and the non-data frame, and the second value is an error between a downlink transmission frame and an uplink transmission frame that are of a same frame type.

Optionally, the transmit power of the first transmission frame is a difference between the transmit power of the third transmission frame, the first value, and the second value.

When the communication apparatus 90 is configured to implement functions of the foregoing first device,
in some embodiments, the processing module 901 is configured to obtain a first identifier; and obtain a first transmit power for a first terminal device indicated by the first identifier, where the first transmit power is for sending a data frame of the first terminal device.

Optionally, the transceiver module 902 is further configured to send the first transmit power to an access point AP associated with the first terminal device.

Optionally, the transceiver module 902 is further configured to send the data frame of the first terminal device based on the first transmit power.

Optionally, the first transmit power is greater than a first threshold.

Optionally, the processing module 901 is further configured to obtain a first path loss and a received signal strength threshold of the first terminal device, where the first path loss is a path loss of a transmission frame between the first terminal device and the AP associated with the first terminal device; and determine the first transmit power based on the first path loss and the received signal strength threshold of the first terminal device.

Optionally, the processing module 901 is further configured to obtain a transmit power of a first transmission frame and a received signal strength of the first transmission frame, where the transmission frame includes the first transmission frame; and determine the first path loss based on the transmit power of the first transmission frame and the received signal strength of the first transmission frame.

Optionally, the first path loss is a difference between the transmit power of the first transmission frame and the signal strength of the first transmission frame.

Optionally, the transceiver module 902 is further configured to obtain a second transmission frame, where the second transmission frame indicates the received signal strength of the first transmission frame.

Optionally, the processing module 901 is further configured to obtain a transmit power of a third transmission frame, where a frame type of the third transmission frame is different from a frame type of the first transmission frame; and determine the transmit power of the first transmission frame based on the transmit power of the third transmission frame.

Optionally, the processing module 901 is further configured to obtain a first value, where the first value is an error between the data frame and the non-data frame; and determine the transmit power of the first transmission frame based on the transmit power of the third transmission frame and the first value.

Optionally, the transmit power of the first transmission frame is a difference between the transmit power of the third transmission frame and the first value.

Optionally, the processing module 901 is further configured to obtain a first value, where the first value is an error between the data frame and the non-data frame; obtain a second value, where the second value is an error between a downlink transmission frame and an uplink transmission frame that are of a same frame type; and determine the transmit power of the first transmission frame based on the transmit power of the third transmission frame, the first value, and the second value.

Optionally, the transmit power of the first transmission frame is a difference between the transmit power of the third transmission frame, the first value, and the second value.

Optionally, the transceiver module 902 is further configured to receive a rate requirement of the first terminal device.

With reference to the foregoing two embodiments, optionally, the received signal strength threshold of the first terminal device is a first receiver sensitivity in the at least one receiver sensitivity.

With reference to the foregoing two embodiments, optionally, the first receiver sensitivity is a largest sensitivity in the at least one receiver sensitivity, or the first receiver sensitivity is any one of the at least one receiver sensitivity.

With reference to the foregoing two embodiments, optionally, the at least one receiver sensitivity is determined based on at least one modulation and coding scheme MCS; and the first receiver sensitivity is a receiver sensitivity corresponding to a first MCS, where the first MCS is an MCS with a largest value in the at least one MCS, or the first MCS is one of the at least one MCS.

With reference to the foregoing two embodiments, optionally, the received signal strength threshold of the first terminal device is determined based on a first signal-to-noise ratio threshold in at least one signal-to-noise ratio threshold.

With reference to the foregoing two embodiments, optionally, the received signal strength threshold of the first terminal device is the first signal-to-noise ratio threshold, or the received signal strength threshold of the first terminal device is a sum of the first signal-to-noise ratio threshold and a first noise value, where the first noise value is a magnitude of noise between the AP and the first terminal device.

With reference to the foregoing two embodiments, optionally, the first signal-to-noise ratio threshold is a largest signal-to-noise ratio threshold in the at least one signal-to-noise ratio threshold, or the first signal-to-noise ratio threshold is a largest signal-to-noise ratio threshold in the at least one signal-to-noise ratio threshold.

With reference to the foregoing two embodiments, optionally, the at least one signal-to-noise ratio threshold is determined based on at least one MCS; and the first signal-to-noise ratio threshold is a signal-to-noise ratio threshold corresponding to a first MCS, where the first MCS is an MCS with a largest value in the at least one MCS, or the first MCS is any one of the at least one MCS.

With reference to the foregoing two embodiments, optionally, the at least one MCS includes one or more MCSs corresponding to the rate requirement of the first terminal device.

With reference to the foregoing two embodiments, optionally, the first identifier includes an identifier of the first terminal device; or the first identifier includes a user identifier, and the user identifier indicates a user corresponding to the first terminal device.

All related content of the steps in the foregoing method embodiments may be cited in function descriptions of the corresponding functional modules. Details are not described herein again.

In this application, the communication apparatus 90 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another device that can provide the foregoing functions.

In some embodiments, when the communication apparatus 90 in FIG. 9 is a chip or a chip system, a function/implementation process of the transceiver module 902 may be implemented by an input/output interface (or a communication interface) of the chip or the chip system, and a function/implementation process of the processing module 901 may be implemented by a processor (or a processing circuit) of the chip or the chip system.

The communication apparatus 90 provided in this embodiment may perform the foregoing methods. Therefore, for technical effects that can be achieved by the communication apparatus, refer to the foregoing method embodiments. Details are not described herein again.

In a possible product form, the terminal device or the first device in embodiments of this application may be implemented by using one or more field programmable gate arrays (field programmable gate arrays, FPGAs), a programmable logic device (programmable logic device, PLD), a controller, a state machine, a logic gate, a discrete hardware component, any other appropriate circuit, or any combination of circuits that can perform various functions described in this application.

In another possible product form, the terminal device or the first device in embodiments of this application may be implemented by using a general bus architecture. For ease of description, refer to FIG. 10. FIG. 10 is a diagram of a structure of a communication apparatus 100 according to an embodiment of this application. The communication apparatus 100 includes a processor 1001 and a transceiver 1002. The communication apparatus 100 may be a first device, or a chip or a chip system in the first device. Alternatively, the communication apparatus 100 may be a terminal device, or a chip or a module in the terminal device. FIG. 10 shows only main components in the communication apparatus 100. In addition to the processor 1001 and the transceiver 1002, the communication apparatus may further include a memory 1003 and an input/output apparatus (not shown in the figure).

Optionally, the processor 1001 is mainly configured to process a communication protocol and communication data, control the entire communication apparatus, execute a software program, and process data of the software program. The memory 1003 is mainly configured to store the software program and data. The transceiver 1002 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus like a touchscreen, a display, or a keyboard, is mainly configured to receive data input by a user and output data to the user.

Optionally, the processor 1001, the transceiver 1002, and the memory 1003 may be connected through a communication bus.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and then outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in a hardware implementation, a person skilled in the art may figure out that the communication apparatus 90 may be in a form of the communication apparatus 100 shown in FIG. 10.

In an example, a function/implementation process of the processing module 901 in FIG. 9 may be implemented by the processor 1001 in the communication apparatus 100 shown in FIG. 10 by invoking computer-executable instructions stored in the memory 1003. A function/implementation process of the transceiver module 902 in FIG. 9 may be implemented by the transceiver 1002 in the communication apparatus 100 shown in FIG. 10.

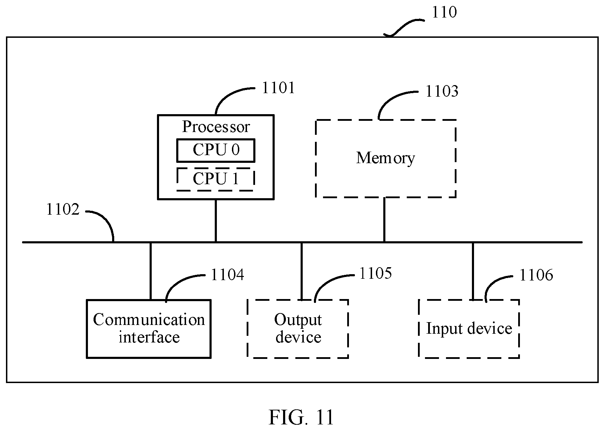

In still another possible product form, the first device or the terminal device in this application may use a composition structure shown in FIG. 11, or include components shown in FIG. 11. FIG. 11 is a diagram of composition of a communication apparatus 110 according to this application. The communication apparatus 110 may be a terminal device, or a chip or a system-on-a-chip in the terminal device, or may be a first device, or a module, a chip, or a system-on-a-chip in the first device.

As shown in FIG. 11, the communication apparatus 110 includes at least one processor 1101 and at least one communication interface (an example in which one communication interface 1104 and one processor 1101 are included is merely used for description in FIG. 11). Optionally, the communication apparatus 110 may further include a communication bus 1102 and a memory 1103.

The processor 1101 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1101 may be another apparatus having a processing function, for example, a circuit, a device, or a software module. This is not limited.

The communication bus 1102 is configured to connect different components in the communication apparatus 110, so that the different components can communicate with each other. The communication bus 1102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The communication interface 1104 is configured to communicate with another device or a communication network. For example, the communication interface 1104 may be a module, a circuit, a transceiver, or any apparatus that can implement communication. Optionally, the communication interface 1104 may alternatively be an input/output interface located in the processor 1101, and is configured to implement signal input and signal output of the processor.

The memory 1103 may be an apparatus having a storage function, and is configured to store instructions and/or data. The instructions may be computer programs.

For example, the memory 1103 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 1103 may be independent of the processor 1101, or may be integrated with the processor 1101. The memory 1103 may be located inside the communication apparatus 110, or may be located outside the communication apparatus 110. This is not limited. The processor 1101 may be configured to execute the instructions stored in the memory 1103, to implement the method provided in the foregoing embodiments of this application.

In an optional implementation, the communication apparatus 110 may further include an output device 1105 and an input device 1106. The output device 1105 communicates with the processor 1101, and may display information in a plurality of manners. For example, the output device 1105 may be a liquid crystal display (liquid crystal display, LCD), a light emitting diode (light emitting diode, LED) display device, a cathode ray tube (cathode ray tube, CRT) display device, or a projector (projector). The input device 1106 communicates with the processor 1101, and may receive user input in a plurality of manners. For example, the input device 1106 may be a mouse, a keyboard, a touchscreen device, or a sensor device.

In some embodiments, in a hardware implementation, a person skilled in the art may figure out that the communication apparatus 90 shown in FIG. 9 may be in a form of the communication apparatus 110 shown in FIG. 11.

In an example, a function/implementation process of the processing module 901 in FIG. 9 may be implemented by the processor 1101 in the communication apparatus 110 shown in FIG. 11 by invoking computer-executable instructions stored in the memory 1103. A function/implementation process of the transceiver module 902 in FIG. 9 may be implemented by the communication interface 1104 in the communication apparatus 110 shown in FIG. 11.

It should be noted that the structure shown in FIG. 11 does not constitute a specific limitation on the first device or the terminal device. For example, in some other embodiments of this application, the first device or the terminal device may include more or fewer components than those shown in the figure, or some components may be combined, or some components may be split, or different component arrangements may be used. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another device) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete device. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separated, that is, may be located together in one place or distributed on a plurality of network units. Components displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that these modifications and variations fall within the scope of protection defined by the claims in this application and equivalent technologies thereof.

## Claims

1. A communication method, wherein the method comprises:
obtaining a first identifier; and
sending, based on a first transmit power, a data frame to a first terminal device indicated by the first identifier.

2. The method according to claim 1, wherein the method further comprises:
obtaining a second identifier; and
sending, based on a second transmit power, a data frame to a second terminal device indicated by the second identifier.

3. The method according to claim 1 or 2, wherein the first transmit power is greater than a first threshold.

4. The method according to any one of claims 1 to 3, wherein the first transmit power is determined based on a first path loss and a received signal strength threshold of the first terminal device, wherein the first path loss is a path loss of a transmission frame between the first terminal device and an access point AP associated with the first terminal device.

5. The method according to claim 4, wherein the first path loss is determined based on a transmit power of a first transmission frame and a received signal strength of the first transmission frame.

6. The method according to claim 5, wherein the first path loss is a difference between the transmit power of the first transmission frame and the received signal strength of the first transmission frame.

7. The method according to claim 5 or 6, wherein the first transmission frame is a downlink transmission frame, the received signal strength of the first transmission frame is determined based on a second transmission frame, the second transmission frame indicates the received signal strength of the first transmission frame, and the second transmission frame is an uplink transmission frame.

8. The method according to claim 5 or 6, wherein the first transmission frame is an uplink transmission frame, the transmit power of the first transmission frame is determined based on a transmit power of a third transmission frame, and a frame type of the third transmission frame is different from a frame type of the first transmission frame.

9. The method according to claim 8, wherein the first transmission frame is an uplink data frame, and the third transmission frame is an uplink non-data frame; and
that the transmit power of the first transmission frame is determined based on the transmit power of the third transmission frame comprises: the transmit power of the first transmission frame is determined based on the transmit power of the third transmission frame and a first value, wherein the first value is an error between the data frame and the non-data frame.

10. The method according to claim 9, wherein the transmit power of the first transmission frame is a difference between the transmit power of the third transmission frame and the first value.

11. The method according to claim 8, wherein the first transmission frame is an uplink data frame, and the third transmission frame is a downlink non-data frame; and
that the transmit power of the first transmission frame is determined based on the transmit power of the third transmission frame comprises: the transmit power of the first transmission frame is determined based on the transmit power of the third transmission frame, a first value, and a second value, wherein the first value is an error between the data frame and the non-data frame, and the second value is an error between a downlink transmission frame and an uplink transmission frame that are of a same frame type.

12. The method according to claim 11, wherein the transmit power of the first transmission frame is a difference between the transmit power of the third transmission frame, the first value, and the second value.

13. The method according to any one of claims 4 to 12, wherein the received signal strength threshold of the first terminal device is a first receiver sensitivity in at least one receiver sensitivity.

14. The method according to claim 13, wherein the first receiver sensitivity is a largest sensitivity in the at least one receiver sensitivity, or the first receiver sensitivity is any one of the at least one receiver sensitivity.

15. The method according to claim 13 or 14, wherein the at least one receiver sensitivity is determined based on at least one modulation and coding scheme MCS; and
the first receiver sensitivity is a receiver sensitivity corresponding to a first MCS, wherein the first MCS is an MCS with a largest value in the at least one MCS, or the first MCS is any one of the at least one MCS.

16. The method according to any one of claims 4 to 12, wherein the received signal strength threshold of the first terminal device is determined based on a first signal-to-noise ratio threshold in at least one signal-to-noise ratio threshold.

17. The method according to claim 16, wherein the received signal strength threshold of the first terminal device is the first signal-to-noise ratio threshold, or the received signal strength threshold of the first terminal device is a sum of the first signal-to-noise ratio threshold and a first noise value, wherein the first noise value is a magnitude of noise between the AP and the first terminal device.

18. The method according to claim 16 or 17, wherein the first signal-to-noise ratio threshold is a largest signal-to-noise ratio threshold in the at least one signal-to-noise ratio threshold.

19. The method according to any one of claims 16 to 18, wherein the at least one signal-to-noise ratio threshold is determined based on at least one MCS; and
the first signal-to-noise ratio threshold is a signal-to-noise ratio threshold corresponding to a first MCS, wherein the first MCS is an MCS with a largest value in the at least one MCS, or the first MCS is any one of the at least one MCS.

20. The method according to claim 15 or 19, wherein the at least one MCS comprises one or more MCSs corresponding to a rate requirement of the first terminal device.

21. The method according to any one of claims 1 to 20, wherein the first identifier comprises an identifier of the first terminal device; or the first identifier comprises a user identifier, and the user identifier indicates a user corresponding to the first terminal device.

22. A communication method, wherein the method comprises:
obtaining a first identifier; and
obtaining a first transmit power for a first terminal device indicated by the first identifier, wherein the first transmit power is for sending a data frame of the first terminal device.

23. The method according to claim 22, wherein the method further comprises:
sending the first transmit power to an access point AP associated with the first terminal device.

24. The method according to claim 22 or 23, wherein the first transmit power is greater than a first threshold.

25. The method according to claim 22 or 23, wherein the obtaining the first transmit power for the first terminal device indicated by the first identifier comprises:
obtaining a first path loss and a received signal strength threshold of the first terminal device, wherein the first path loss is a path loss of a transmission frame between the first terminal device and the AP associated with the first terminal device; and
determining the first transmit power based on the first path loss and the received signal strength threshold of the first terminal device.

26. The method according to any one of claims 22 to 25, wherein the first identifier comprises an identifier of the first terminal device; or the first identifier comprises a user identifier, and the user identifier indicates a user corresponding to the first terminal device.

27. A communication apparatus, wherein the communication apparatus comprises a plurality of functional modules, and the plurality of functional modules interact with each other to implement the method according to any one of claims 1 to 21, or implement the method according to any one of claims 22 to 26.

28. A computer-readable storage medium, wherein the computer-readable storage medium stores computer instructions or a program, and when the computer instructions or the program is run on a computer, the method according to any one of claims 1 to 21 is performed, or the method according to any one of claims 22 to 26 is performed.
